# EUROPEAN PATENT SPECIFICATION

(11) **EP 4 554 043 B1**
(45) Date of publication and mention of the grant of the patent: **28.10.2026**
(21) Application number: 24211937.8
(22) Date of filing: 08.11.2024
(51) Int. Cl.: H02J 7/00, H02J 9/00

(54) **ENERGY STORAGE POWER SUPPLY**
ENERGIESPEICHER-STROMVERSORGUNG
ALIMENTATION ÉLECTRIQUE À STOCKAGE D'ÉNERGIE

(30) Priority: 10.11.2023 CN 202323055599 U
(43) Date of publication of application: 14.05.2025
(73) Proprietor: Guangdong Aoyun Technology Co., Ltd., 516006 Huizhou Guangdong (CN)
(72) Inventor: Zhu, Xueping, Huizhou, 516006 (CN)
(74) Representative: Cleanthous, Marinos

(56) References cited:
- EP-A1- 4 485 746
- WO-A1-2022/087064
- US-A1- 2015 091 392
- US-A1- 2018 198 292
- US-A1- 2022 344 741
- US-A1- 2023 291 045

## Description

### TECHNICAL FIELD

The present disclosure relates to the field of power supplies, and in particular, to an energy storage power supply.

### BACKGROUND

As a tool for storing energy and supplying power, an energy storage power supply usually needs to be provided with many batteries. For the existing energy storage power supplies on the market, several batteries are packed into an entire battery pack by means of a series of procedures such as binding, gluing, filling, blow-molding, sealing and decoration, and then the entire battery pack is put into a housing of the energy storage power supply. Due to the multiple procedures such as binding, gluing, filling, blow-molding, sealing, screwing, and decoration, the procedures are complex, and the batteries need to be aligned with electrode plates. As a result, production and assembling are slow. Furthermore, many parts need to be fixed with screws, which increases the costs and causes easy movement that leads to a high disqualification rate during assembling and greatly affects the production efficiency. One example prior art document is US2015/091392.

### SUMMARY

To overcome the shortcomings in the prior art, the present disclosure provides an energy storage power supply which is easily assembled and multifunctional, reduces the number of screws, is convenient for production and assembling, and improves the production efficiency.

In the first aspect, the present disclosure provides an energy storage power supply, including:
at least one battery pack;
an energy storage housing, provided with a first supporting plate, a second supporting plate opposite to the first supporting plate, and a battery compartment located between the first supporting plate and the second supporting plate, wherein the battery compartment is provided with an opening in at least one side; the opening is configured to allow the at least one battery pack to slide into the battery compartment in a preset axial direction;
wherein the energy storage housing comprises a first side of the first supporting plate away from the second supporting plate, a second side of the second supporting plate away from the first supporting plate, and a third side and a fourth side which are arranged in the preset axial direction and adjacent to the first side and the second side;
a first circuit board, arranged on the first side;
a second circuit board, arranged on the second side;
a third circuit board, arranged on the third side; two ends of the third circuit board are respectively adjacent to the first supporting plate and the second supporting plate; and
a front shell and a rear shell, wherein the front shell is located on the fourth side; and the rear shell is located on the third side and on one side of the third circuit board away from the energy storage housing;
wherein the front shell and the rear shell are respectively located on two sides of the energy storage housing in the preset axial direction; the front shell and the rear shell are configured to be detachably assembled with the energy storage housing; and the energy storage housing, the first circuit board, the second circuit board and the third circuit board are fixed in an accommodating chamber enclosed by the front shell and the rear shell.

As an improvement of the present disclosure, the battery pack includes at least two batteries; the battery compartment includes at least two battery mounting positions; the at least two battery mounting positions are communicated to the opening; and the batteries are arranged at the battery mounting positions; a baffle plate is arranged in the battery compartment; the baffle plate is arranged between the two battery mounting positions; and a length of the baffle plate in the preset axial direction is less than a length of a side wall of the battery compartment in the preset axial direction.

As an improvement of the present disclosure, the front shell and the rear shell are configured to be detachably assembled.

As an improvement of the present disclosure, the front shell is provided with a first buckle slot, and the rear shell is provided with a first buckle; and the first buckle and the first buckle slot are configured to be detachably connected to each other.

As an improvement of the present disclosure, the energy storage power supply includes a chamber cover body arranged in a lengthwise direction of the first supporting plate or the second supporting plate; the chamber cover body is configured to be detachably connected to the energy storage housing; at least two second buckles are arranged on the chamber cover body; at least two second buckle slots are provided in the energy storage housing; and the second buckles and the second buckle slots are configured to be detachably connected to each other; a third buckle slot communicated to one of the second buckle slots is provided in the front shell, and a fourth buckle slot communicated to the other second buckle slot is provided in the rear shell; when the chamber cover body is assembled to the energy storage housing, one of the second buckles passes through the third buckle slot and one of the second buckle slots and is connected to the front shell and the energy storage housing; and the other second buckle passes through the fourth slot and the other second buckle slot and is connected to the rear shell and the energy storage housing.

As an improvement of the present disclosure, the energy storage power supply further includes a side plate arranged in a lengthwise direction of the first supporting plate or the second supporting plate; the side plate is configured to be detachably connected to the energy storage housing; at least one third buckle and at least two fourth buckles are arranged on the side plate; at least one fifth buckle slot is provided in the energy storage housing; at least one sixth buckle slot is provided in the front shell; at least one seventh buckle slot is provided in the rear shell; the third buckle is configured to be detachably connected to the fifth buckle slot; the fourth buckle is configured to be detachably connected to the sixth buckle slot; and one of the fourth buckles is configured to be detachably connected to the seventh buckle slot.

As an improvement of the present disclosure, the energy storage power supply further includes a top plate; and the top plate is configured to be detachably assembled with the front shell and the rear shell.

As an improvement of the present disclosure, at least two fifth buckles are arranged on the top plate; the front shell is provided with an eighth buckle slot; the rear shell is provided with a ninth buckle slot; one fifth buckle is configured to be detachably connected to the eighth buckle slot; and one fifth buckle is configured to be detachably connected to the ninth buckle slot.

As an improvement of the present disclosure, the energy storage housing further includes a guide slot; the guide slot is provided in one side of the energy storage housing located on the second supporting plate; a guide plate is arranged at a corresponding position on the front shell or the rear shell; and the guide plate is configured to slide along the guide slot.

As an improvement of the present disclosure, the energy storage housing is provided with a first mounting portion; the first mounting portion is arranged on one side of the first supporting plate away from the second supporting plate; and the first circuit board and the first mounting portion are configured to be detachably connected to each other.

As an improvement of the present disclosure, the energy storage housing is provided with a first fixing portion; the first fixing portion is arranged on one side of the second supporting plate away from the first supporting plate; the first fixing portion is configured to be detachably connected to the second circuit board; and a first limiting portion configured to resist against and locate the second circuit board is further arranged on one side of the second supporting plate away from the first supporting plate.

As an improvement of the present disclosure, a second mounting portion is arranged on the energy storage housing; the energy storage power supply further includes a lighting device configured to be electrically connected to the second circuit board; the lighting device includes a heat dissipation fin configured to be detachably connected to the second mounting portion; the heat dissipation fin includes a third mounting portion and a second limiting portion connected to the third mounting portion; the third mounting portion is configured to be detachably connected to the second mounting portion; and the second limiting portion is configured to resist against the second mounting portion to limit a mounting position of the heat dissipation fin; the energy storage housing further includes a lighting chamber; the lighting chamber is provided with a first light outlet; the second mounting portion is arranged in the lighting chamber; the lighting device is arranged in the lighting chamber; the lighting device further includes a light-emitting element and a condensing lens arranged on the heat dissipation fin; a light-emitting surface of the light-emitting element is arranged in a manner of facing the condensing lens and the first light outlet; the condensing lens is configured to condense light emitted by the light-emitting element to form a small beam with a long lighting distance; and the second circuit board is configured to be electrically connected to the first circuit board.

As an improvement of the present disclosure, a second fixing portion is arranged on one side of the rear shell facing the front shell; a hole is provided in the third circuit board; the third circuit board and the second fixing portion are configured to be detachably connected to each other; and a supporting portion configured to resist against and locate the third circuit board is further arranged on one side of the rear shell facing the front shell.

As an improvement of the present disclosure, a fourth mounting portion and a fifth mounting portion are respectively arranged on the front shell and the rear shell; when the front shell and the rear shell are mounted on the energy storage housing, the fourth mounting portion and the fifth mounting portion resist against each other to form a mounting sliding chute; the energy storage housing is further provided with a light-transmittance lampshade and a night lamp; the lampshade is configured to be retractable and foldable; the night lamp is arranged in the lampshade; the night lamp is electrically connected to the second circuit board; the lampshade or the night lamp is provided with a mounting structure; and the mounting structure is configured to be detachably connected to the mounting sliding chute.

As an improvement of the present disclosure, the energy storage power supply further includes a handle arranged on the energy storage housing; the handle includes a seventh mounting portion and a silica gel strip arranged on the seventh mounting portion; the energy storage power supply further includes a strap; the strap is configured to be detachably connected to the energy storage housing; a length of the strap is in a range of 500 mm to 1900 mm; a width is in a range of 10 mm to 60 mm; a thickness of the strap is in a range of 0.5 mm to 5 mm; and a ratio of the length of the strap to a length of the handle is in a range of 1:3 to 1:10.

In the second aspect, the present disclosure further provides an assembling method for an energy storage power supply, including:
providing at least one battery pack;
providing an energy storage housing, wherein the energy storage housing is provided with a first supporting plate, a second supporting plate opposite to the first supporting plate, and a battery compartment located between the first supporting plate and the second supporting plate, wherein the battery compartment is provided with an opening in at least one side; the opening is configured to allow the at least one battery pack to slide into the battery compartment in a preset axial direction;
wherein the energy storage housing comprises a first side of the first supporting plate away from the second supporting plate, a second side of the second supporting plate away from the first supporting plate, and a third side and a fourth side which are arranged in the preset axial direction and adjacent to the first side and the second side;
sliding the battery pack into the battery compartment in a preset axial direction after making the battery pack correspond to the opening;
providing a first circuit board, a second circuit board and a third circuit board;
the first circuit board arranged on the first side;
the second circuit board arranged on the second side;
the third circuit board arranged on the third side; two ends of the third circuit board are respectively adjacent to the first supporting plate and the second supporting plate; and
providing a front shell and a rear shell; wherein the front shell is located on the fourth side; and is located on one side of the third circuit board away from the energy storage housing;
respectively arranging the front shell and the rear shell on two sides of the energy storage housing in the preset axial direction; and assembling the front shell and the rear shell on an outer side of the energy storage housing to fix the first circuit board, the second circuit board and the third circuit board, and the energy storage housing in an accommodating space enclosed by the front shell and the rear shell.

Beneficial effects of the present disclosure are as follows: According to the energy storage power supply provided by the present disclosure, the battery compartment provided with the opening in one side is arranged on the energy storage housing, and the battery pack is slid into the battery compartment from the opening in the preset axial direction, so that mounting is facilitated, and a mounting efficiency is improved. The front shell and the rear shell are respectively mounted on two sides of the energy storage housing and are assembled by detachable connection, and preliminary mounting can be achieved without a screw or a bolt, so that the costs are reduced, and the assembling efficiency is improved. Movement caused by screwing is avoided, so that a disqualification rate is lowered; the production costs of the product are reduced; and the competitiveness is improved.

### BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.
FIG. 1 is a schematic diagram of an entire structure of the present disclosure;
FIG. 2 is an exploded view of the present disclosure;
FIG. 3 is an exploded view of the present disclosure, viewed from another angle;
FIG. 4 is an enlarged view of part A in FIG. 2;
FIG. 5 is an enlarged view of part B in FIG. 3;
FIG. 6 is an enlarged view of part C in FIG. 3;
FIG. 7 is a schematic partially structural diagram of the present disclosure;
FIG. 8 is an enlarged view of part D in FIG. 7;
FIG. 9 is a schematic partially structural diagram of the present disclosure, viewed from another angle;
FIG. 10 is a schematic structural diagram of an energy storage housing and a battery pack of the present disclosure;
FIG. 11 is an enlarged view of part E in FIG. 10;
FIG. 12 is an exploded view of a lighting device of the present disclosure;
FIG. 13 is an exploded view of a lighting device of the present disclosure, viewed from another angle;
FIG. 14 is a schematic structural diagram of a heat radiation fin of a lighting device of the present disclosure;
FIG. 15 is a sectional view cut away along an energy storage housing, a battery, and a battery compartment;
FIG. 16 is a sectional view cut away along an energy storage housing, a front shell, a rear shell, a battery, a battery compartment, a first electrode plate, and a second electrode plate;
FIG. 17 is a schematic diagram of another entire structure of the present disclosure;
FIG. 18 is a schematic diagram of an assembling method of the present disclosure;
FIG. 19 is a system block diagram of the present disclosure;
FIG. 20 is an entire circuit diagram of the present disclosure;
FIG. 21 is a circuit diagram of a charging control circuit of the present disclosure;
FIG. 22 is a circuit diagram of a first direct current output circuit of the present disclosure;
FIG. 23 is a circuit diagram of an alternating current output circuit of the present disclosure;
FIG. 24 is a circuit diagram of a switch module circuit of the present disclosure;
FIG. 25 is a circuit diagram of a second direct current output circuit of the present disclosure;
FIG. 26 is a circuit diagram of a lighting module of a driving circuit of the present disclosure; and
FIG. 27 is a circuit diagram of a protection module of a driving circuit of the present disclosure.

### DETAILED DESCRIPTION OF THE EMBODIMENTS

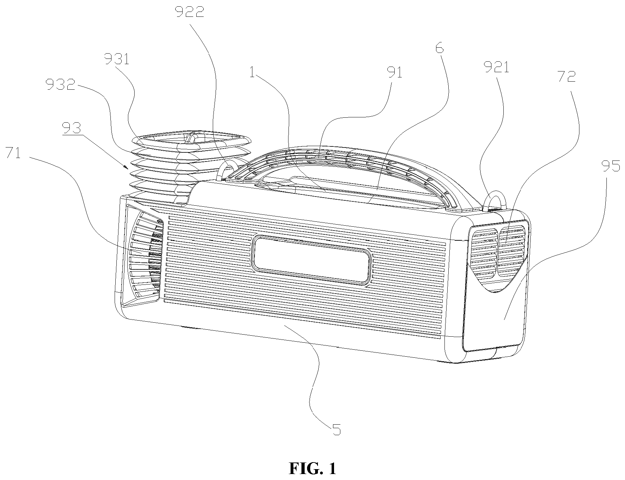

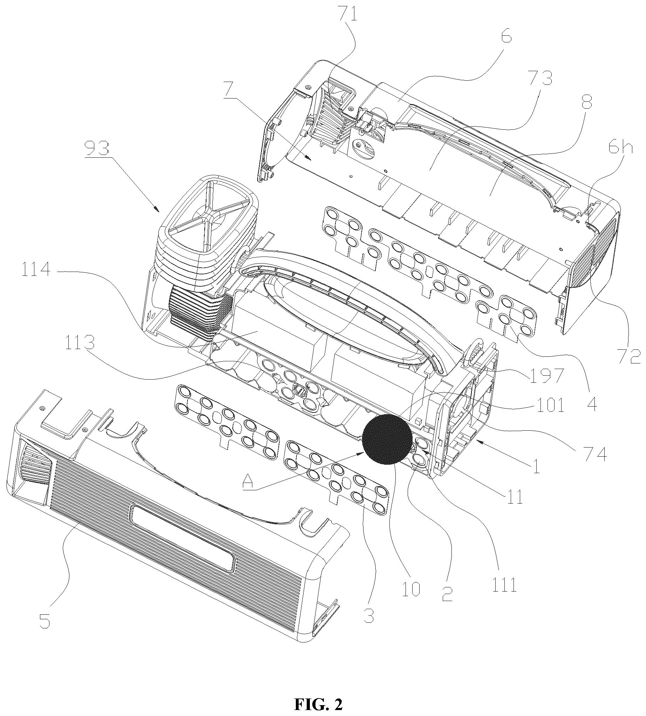

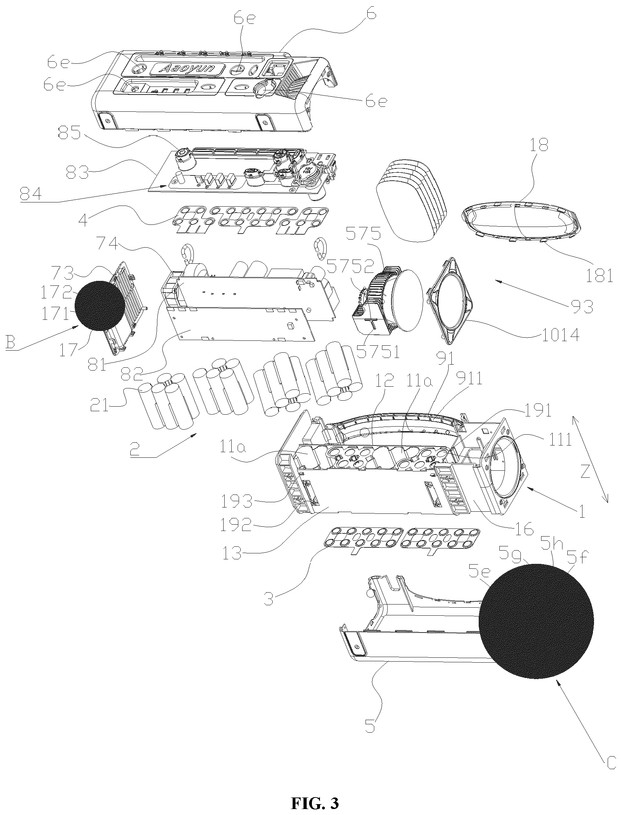

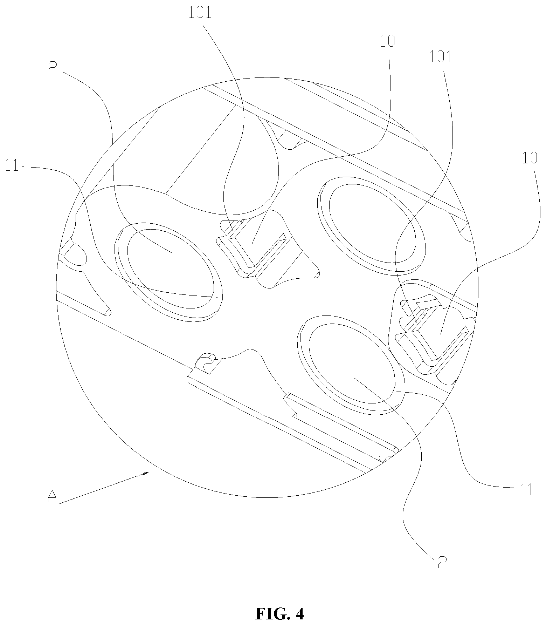

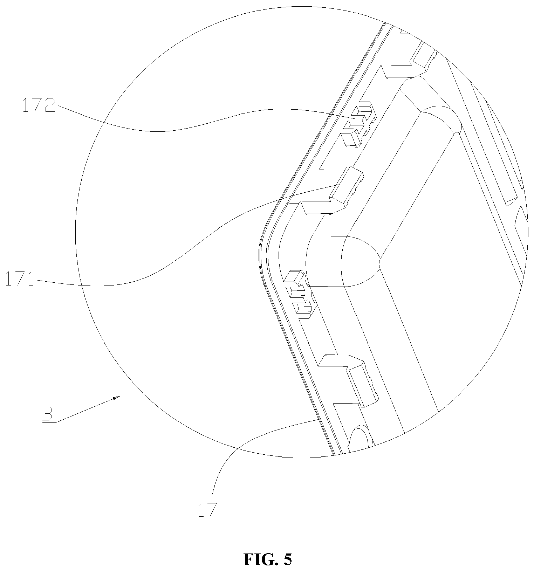

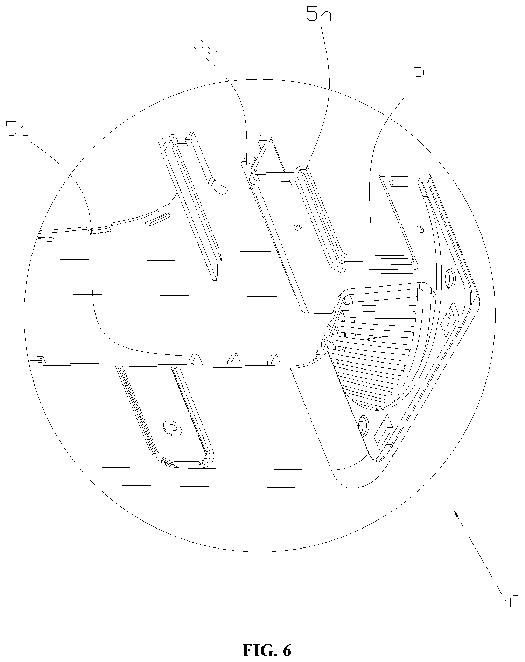

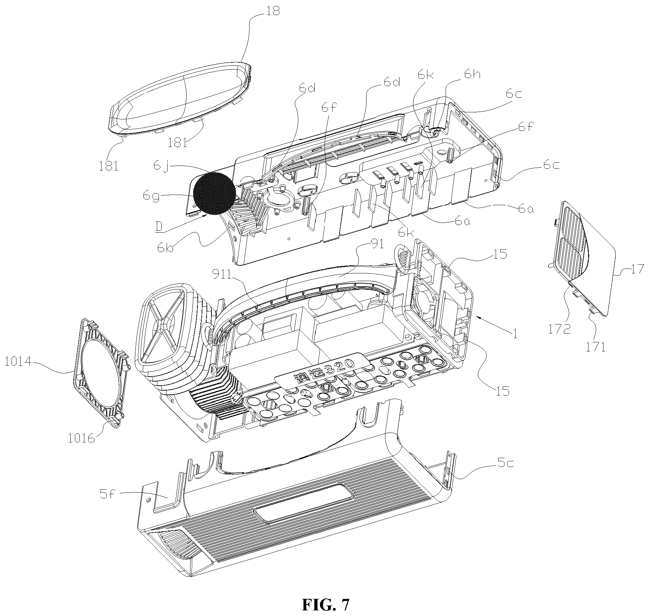

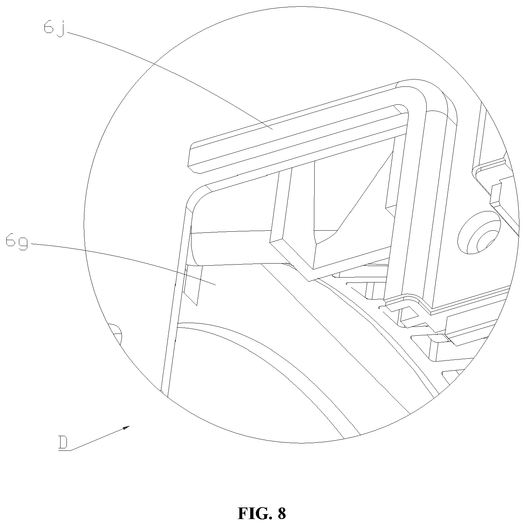

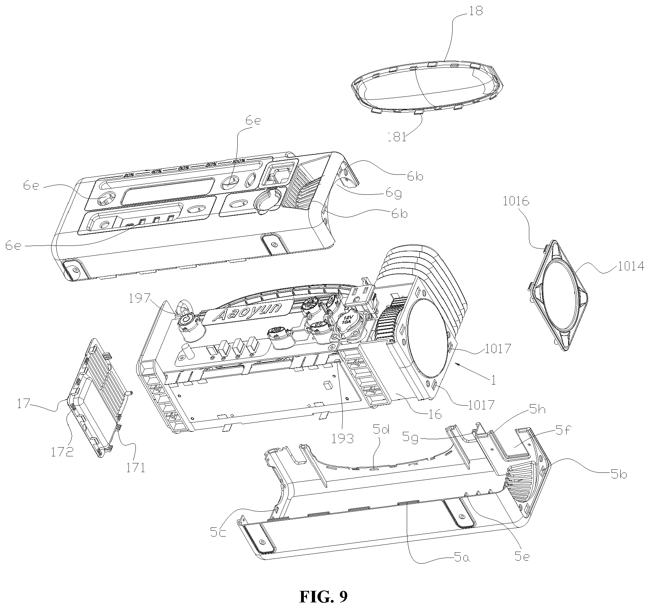

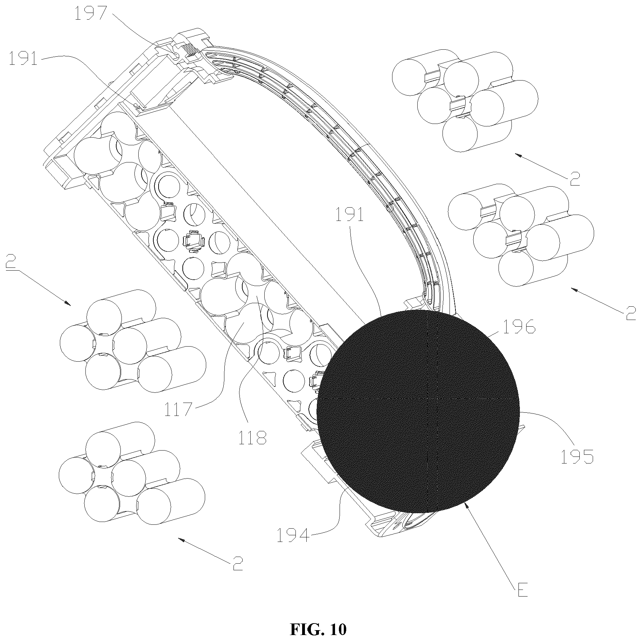

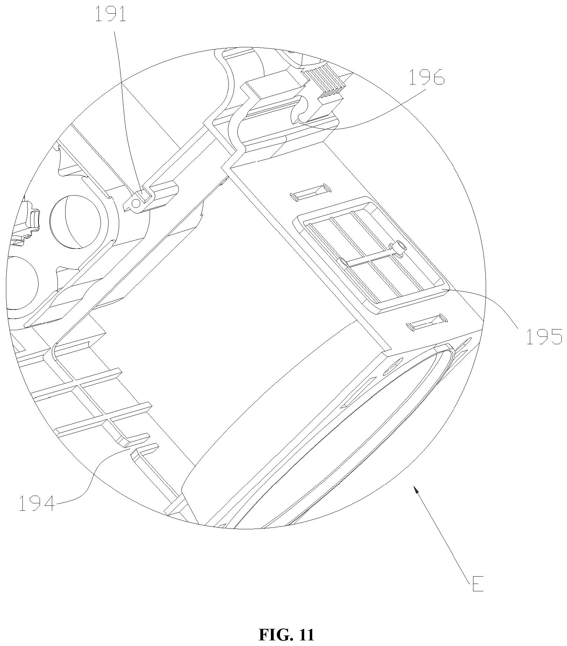

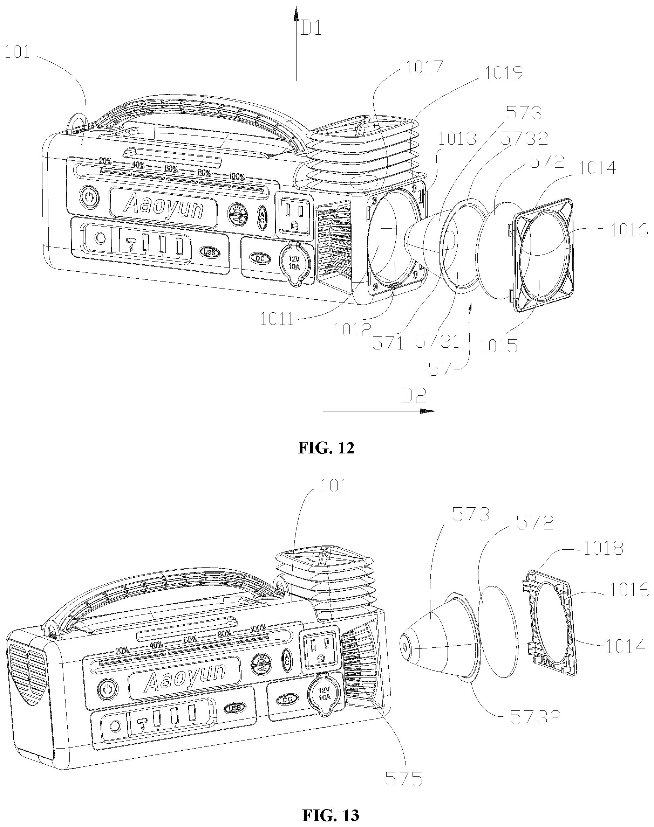

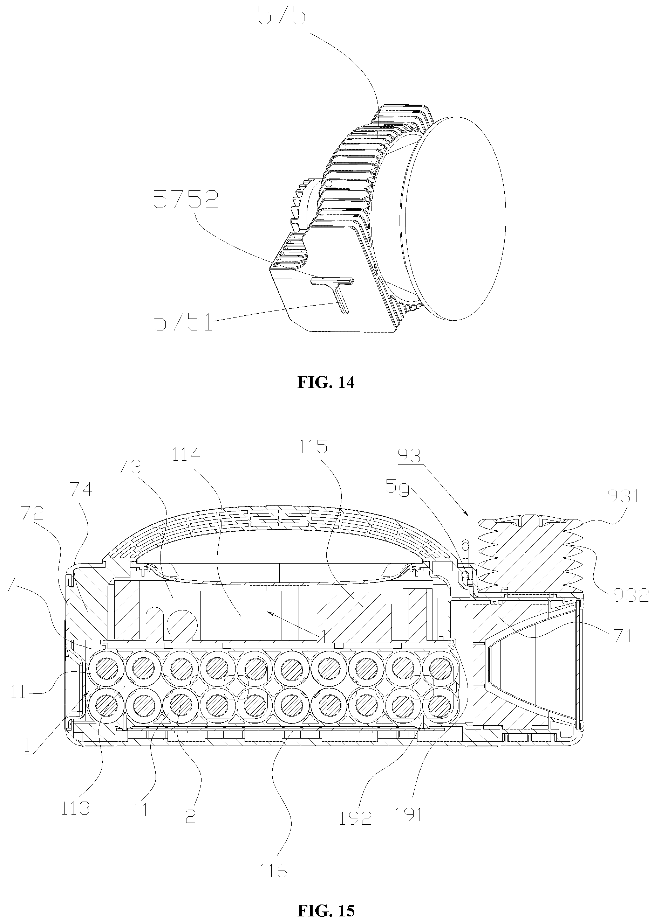

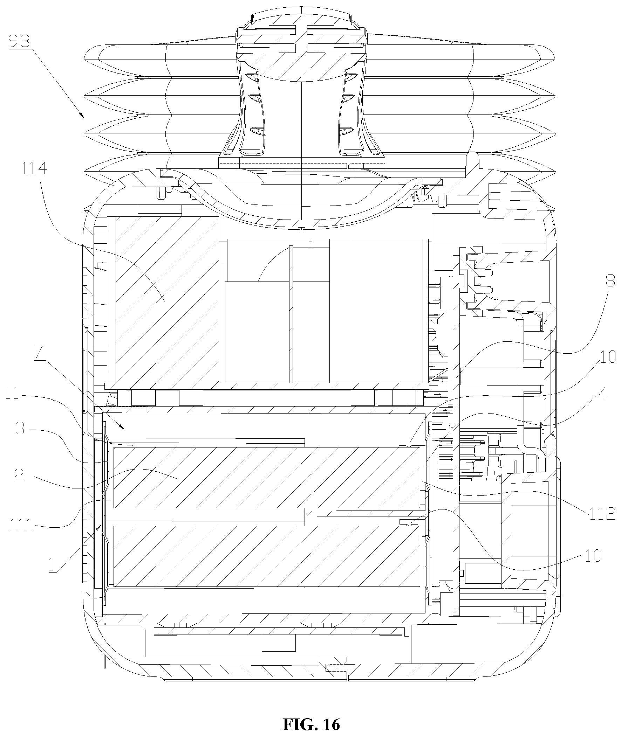

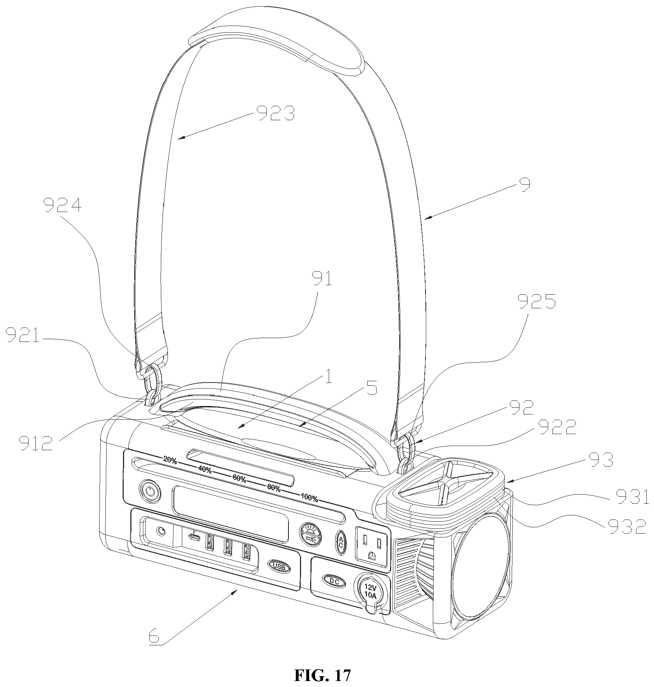

Referring to FIG. 1 to FIG. 17, an energy storage power supply includes an energy storage housing 1, several batteries 21, a first electrode plate 3 and a second electrode plate 4. Several battery compartments 11 are arranged on the energy storage housing 1. One end of each battery compartment 11 is provided with a first opening 111, and the other end of the battery compartment 11 is provided with a second opening 112. When the battery 21 is plugged into the battery compartment 11 via the first opening 111 or the second opening 112, the first electrode plate 3 is covered at the first opening 111, and the second electrode plate 4 is covered at the second opening 112, so that the first electrode plate 3 is connected with an anode of the battery 21, and the second electrode plate 4 is connected with a cathode of the battery 21. By means of the above structure, the energy storage power supply includes the energy storage housing, the several batteries, the first electrode plate and the second electrode plate. The energy storage housing is provided with the several battery compartments. One end of each battery compartment is provided with the first opening, and the other end of the battery compartment is provided with the second opening. When the battery is plugged into the battery compartment via the first opening or the second opening, the first electrode plate is covered at the first opening, and the second electrode plate is covered at the second opening, so that the first electrode plate is connected with the anode of the battery, and the second electrode plate is connected with the cathode of the battery. Therefore, during the production of energy storage power supplies, it is only necessary to directly plug the several batteries into the several battery compartments, then fix the several batteries in the battery compartments through the first electrode plate and the second electrode plate, and connect the several batteries in parallel or in series to form a high-capacity battery pack, so that the energy storage power supply has the functions of storing energy and supplying power. The battery pack is easy to assemble and replaces the conventional battery packs on the market, thus eliminating a series of procedures such as binding of the several batteries, gluing, filling, blow-molding, sealing and decoration, achieving environmental friendliness, facilitating automatic production, reducing the defective rate of energy storage power supplies, and improving the production efficiency and the safety. Further, compared with the existing battery pack on the market, this battery pack has the advantages below. The several batteries are plugged in the battery compartments, so that the several batteries can be isolated from one another. Furthermore, heat generated by the batteries during operation can be dissipated to the outside through the energy storage housing, which greatly improves the heat dissipation performance and safety of the energy storage power supply. Further, according to the battery pack of the existing energy storage power supply on the market, when the energy storage power supply is collided or falls off, the battery pack easily falls apart. In the present disclosure, the batteries are plugged in the several battery compartments of the energy storage housing, then fixed in the battery compartments through the first electrode plate and the second electrode plate, and connected in parallel or series together, so that the structure is more stable. Even if the energy storage power supply is collided or falls off, the batteries can also be firmly fixed in the battery compartments and will not fall apart, so that the energy storage power supply can still store energy and supply power stably, which greatly improves the break resistance and safety of the energy storage power supply.

Specifically, several batteries 21 form at least one battery pack 2. In this embodiment of the present disclosure, four groups of battery packs 2 are taken as an example for explanation. Each group of battery pack 2 includes five batteries 21. Correspondingly, four groups of battery compartments 11 are provided. Each group of battery compartment 11 includes five battery mounting positions 117. Two ends of each battery mounting position 117 are respectively the first opening 111 and the second opening 112. Five adjacent first openings 111 are communicated to form an opening 11a, or five adjacent second openings 112 are also communicated to form an openings 11a, thus forming four groups of openings 11a totally which are respectively located on two opposite sides of the energy storage housing 1, and the two groups of openings 11a on the same side are spaced apart from each other. Since the openings 11a are large, it is easier to insert the batteries 21 into the battery mounting positions 117 during mounting of the batteries 21, which facilitates sliding of the battery packs 2 into the battery compartments 11 in a preset axial direction Z, thereby improving the assembling efficiency of the battery packs 2. The preset axial direction Z is the same as an axial direction of the battery mounting position 117. In this way, after the mounting of the battery packs 2 on one side is completed, a first electrode plate or a second electrode plate on the corresponding side can be mounted. Then, after the battery packs 2 on the other side are mounted, a corresponding second electrode plate or first electrode plate can be mounted, so that the assembling efficiency can be improved.

To ensure an independence of each battery 21 and ensure heat dissipation and safety after the batteries 21 are mounted at the battery mounting positions 117, a baffle plate 118 is further arranged between the battery mounting positions 117 in each group of battery compartment 11 to separate every two battery mounting positions 117 in each group of battery compartment 11. To ensure the mounting efficiency of the batteries 21, a length of each baffle plate 118 in the preset axial direction Z is less than a length of a side wall of each battery compartment 11 in the preset axial direction Z. Namely, the baffle plate 118 in the preset axial direction Z at the battery mounting position 117 extends between the first opening 111 and the second opening 112, and the length is less than a distance between the first opening 111 and the second opening 112. Specifically, in this embodiment, the length of the baffle plate 118 is approximately half a depth of the battery mounting position 117.

When the battery 21 is plugged in the battery compartment 11 via the first opening 111 or the second opening 112, the first electrode plate 3 is connected with one side of the energy storage housing 1, and the second electrode plate 4 is connected with the other side of the energy storage housing 1, so that the first electrode plate 3 is covered at the first opening 111, and the second electrode plate 4 is covered at the second opening 112. The first electrode plate 3 is connected with an anode of the battery 21, and the second electrode plate 4 is connected with a cathode of the battery 21. Specifically, the first electrode plate 3 is a first nickel strap. The second electrode plate 4 is a second nickel strap. When the battery 21 is plugged in the battery compartment 11 via the first opening 111 or the second opening 112, the first nickel strap is welded with one side of the energy storage housing 1, and the second nickel strap is welded with the other side of the energy storage housing 1, so that the first nickel strap is covered at the first opening 111, and the second nickel strap is covered at the second opening 112. The first nickel strap is connected with an anode of the battery 21; and the second nickel strap is connected with a cathode of the battery 21. Further, the first nickel strap is welded with one side of the energy storage housing 1 by means of spot welding or laser welding, and the second nickel strap is welded with the other side of the energy storage housing 1 by means of spot welding or laser welding. By means of the above structure, connection between the first electrode plate, as well as the second electrode plate, and the energy storage housing is effectively achieved. The first electrode plate and the second electrode plate stably fix the batteries in the battery compartments. Furthermore, the several batteries are connected in series or in parallel to form the high-capacity battery pack, so that the energy storage power supply has the functions of storing energy and supplying power. The battery pack is easy to assemble and replaces the conventional battery packs on the market, thus eliminating a series of procedures such as binding of the several batteries, gluing, filling, blow-molding, sealing and decoration, achieving environmental friendliness, facilitating automatic production, reducing the defective rate of energy storage power supplies, and improving the production efficiency and the safety.

In this embodiment, a side wall of each battery compartment 11 is further provided with an elastic member 10. When the battery 21 is plugged in the battery compartment 11 via the first opening 111 or the second opening 112, the elastic member 10 presses and locks the battery into the battery compartment. Specifically, the elastic member 10 is an elastic wall. Slots 101 are arranged on two sides of the elastic wall. When the battery 21 is plugged in the battery compartment 11 via the first opening 111 or the second opening 112, the slots are arranged on the two sides of the elastic wall, so that the elastic wall can be pressed to elastically deform by the battery. In addition, an elastic restoration force generated by the elastic deformation of the elastic wall caused by pressure of the battery presses and locks the battery in the battery compartment. By means of the above structure, the energy storage power supply is reasonable in design and simple and compact in structure; the batteries can be effectively fixed in the battery compartment and prevented from shaking, which greatly improves the stability and safety of the energy storage power supply.

In this embodiment, the energy storage power supply further includes a front shell 5 and a rear shell 6. The energy storage housing 1 is located between the front shell 5 and the rear shell 6. When the front shell 5 is detachably covered at the rear shell 6, the front shell 5 is connected with one side of the energy storage housing 1, and the rear shell 6 is connected with the other side of the energy storage housing 1. When the front shell 5 is detachably covered at the rear shell 6, an accommodating cavity 7 is formed. The several battery compartments 11 are located in the accommodating cavity 7. By means of the above structure, the batteries are fixed by the battery compartments, the first electrode plate and the second electrode plate of the energy storage housing, the fixing of the positions of the batteries is not achieved by the assembling between the energy storage housing and the front shell, as well as the rear shell. The front shell and the rear shell are closed to only provide the accommodating cavity for accommodating the battery compartments. Therefore, the requirement for the assembling precision between the energy storage housing and the front shell, as well as the rear shell, is extremely low, and the dimensional accuracy for the accommodating cavity is also extremely low. The battery pack is easy to assemble and replaces the conventional battery packs on the market, thus eliminating a series of procedures such as binding of the several batteries, gluing, filling, blow-molding, sealing and decoration, achieving environmental friendliness, facilitating automatic production, reducing the defective rate of energy storage power supplies, improving the production efficiency and the safety, and greatly reducing the production cost.

In this embodiment, the several battery compartments 11 are arranged in a honeycomb-shaped manner. The several battery compartments 11 are spaced apart by partition plates 113. By means of the above structure, the several battery compartments arranged in the honeycomb-shaped manner are spaced apart by partition plates, so that heat generated by the batteries during operation is dissipated to the outside through the energy storage housing and the partition plates, which can effectively prevent such a phenomenon of damage to the batteries, and even explosion, caused by accumulation of the heat of the several batteries, thus greatly improving the heat dissipation performance and the safety of the energy storage power supply and also improving the power supply efficiency and the power supply stability of the energy storage power supply.

In this embodiment, the front shell 5 and the rear shell 6 are configured to be detachably connected to each other. Specifically, the front shell 5 is provided with a first buckle slot 5a, and the rear shell 6 is provided with a first buckle 6a; and the first buckle 6a and the first buckle slot 5a are configured to be detachably connected to each other. In other embodiments, a first buckle may be arranged on the front shell 5, and a first buckle slot may be provided in the rear shell 6, to achieve a detachable connection between them.

Further, the energy storage power supply includes a chamber cover body 1014 arranged in a lengthwise direction of the first supporting plate 12 or the second supporting plate 13; the chamber cover body 1014 is configured to be detachably connected to the energy storage housing 1; at least two second buckles 1016 are arranged on the chamber cover body 1014; at least two second buckle slots 1017 are provided in the energy storage housing 1; and the second buckles 1016 and the second buckle slots 1017 are configured to be detachably connected to each other. Through the above structure, the buckle structure can facilitate removal of the chamber cover body 1014 from the energy storage housing 1 and facilitate removal and replacement of a lighting device at any time in case of a damage.

Specifically, the energy storage housing 1 is provided with a lighting chamber 1011, and the lighting chamber 1011 is provided with a first light outlet 1012; and the lighting device 57, wherein the lighting device 57 includes a light-emitting component 571 and a condensing lens 572; the lighting device 57 is arranged in the lighting chamber 1011; a light-emitting surface of the light-emitting component 571 is arranged in a manner of facing the condensing lens 572 and the first light outlet 1012; and the condensing lens 572 is configured to condense light emitted by the light-emitting component 571 to form a small light beam with a long illumination distance. The light-emitting component can be a light-emitting diode (LED) lamp. Through the above structure, the energy storage power supply is provided with the lighting device, and the condensing lens is arranged in front of the light-emitting component. Due to the light condensing effect of the condensing lens, the energy storage power supply can emit the long-distance small light beam, so that when a user uses the energy storage power supply in the open air or other occasions, purposes of a longer illumination distance and a clearer viewing field, which greatly improves the practicality and user experience of the energy storage power supply.

In this embodiment, the condensing lens 572 is a convex lens. Due to the condensing effect of the convex lens itself, the light emitted by the light-emitting component is condensed into the small light beam when passing through the convex lens, thus achieving long-distance illumination.

In this embodiment, the lighting device 57 further includes a lighting shell 573; the lighting shell 573 sis provided with a second light outlet 5731 and a connecting part 5732 located at the second light outlet 5731; a groove 1013 is arranged at the first light outlet 1012; a bottom surface of the connecting part 5732 is connected to a bottom surface of the groove 1013, so that the lighting shell 573 is sleeved in the lighting chamber 1011; and the condensing lens 572 is located in front of the connecting part 5732 and is located in the groove 1013. Through the above structure, a placement position of the condensing lens 572 effectively enables the light emitted by the light-emitting component to pass through the condensing lens 572 and be emitted from the first light outlet 1012 and the second light outlet 5731, thereby achieving the long-distance illumination effect.

In this embodiment, the energy storage housing 1 is provided with a chamber cover body 1014; the chamber cover body 1014 is connected to the energy storage housing 1 to stop the lighting shell 573 and the condensing lens 572 in the lighting chamber 1011; the chamber cover body 1014 is provided with a light passing port 1015; and the light passing port 1015 is communicated to the first light outlet 1012 and the second light outlet 5731. Through the above structure, the design of the chamber cover body 1014 can firmly mount the lighting device and stop it in the energy storage housing 1, which ensures the safety of the lighting device.

In this embodiment, the chamber cover body 1014 is provided with at least one screw mounting column 1018, and the shell 101 is provided with at least one screw hole 1019 matched with the screw mounting column 1018. A screw can pass through the screw hole 1019 and be mounted in the screw mounting column 1018 to ensure that the chamber cover body 1014 is fixedly connected to the shell 101. Through the above structure, the connection between the chamber cover body 1014 and the shell 101 is more secure and stable, ensuring the safety of the lighting device.

Further, a third buckle slot 5b communicated to one of the second buckle slots 1017 is provided in the front shell 5, and a fourth buckle slot 6b communicated to the other second buckle slot 1017 is provided in the rear shell 6; when the chamber cover body 1014 is assembled to the energy storage housing 1, one of the second buckles 1016 passes through the third buckle slot 5b and one of the second buckle slots 1017 and is connected to the front shell 5 and the energy storage housing 1; and the other second buckle 1016 passes through the fourth slot 6b and the other second buckle slot 1017 and is connected to the rear shell 6 and the energy storage housing 1.

Specifically, the energy storage power supply further includes a side plate 17 arranged in a lengthwise direction of the first supporting plate 12 or the second supporting plate 13; the side plate 17 is configured to be detachably connected to the energy storage housing 1; at least two third buckles 171 and at least two fourth buckles 172 are arranged on the side plate 17; at least two fifth buckle slots 15 are provided in the energy storage housing 1; at least two sixth buckle slots 5c are provided in the front shell 5; at least one sixth buckle slot 5c is communicated to one of the fifth buckle slots 15; at least two seventh buckle slots 6c are provided in the rear shell 6; and at least one seventh buckle slot 6c is communicated to the other fifth buckle slot 15. When the side plate 17 is assembled to the energy storage housing 1, one of the third buckles 171 passes through the sixth buckle slot 5c and one of the fifth buckle slots 15 and is connected to the front shell 5 and the energy storage housing 1, and the other third buckle 171 passes through the seventh buckle slot 6c and the other fifth buckle slot 15 and is connected to the rear shell 6 and the energy storage housing 1. One of the fourth buckles 172 is connected to one of the sixth buckle slots 5c, and the other fourth buckle 172 is connected to the seventh buckle slot 6c. In this embodiment, the side plate 17 and the chamber cover body 1014 are separately arranged at the two ends of the energy storage housing 1 and are connected to the front shell 5 and the rear shell 6.

In this embodiment, the energy storage power supply further includes a top plate 18; and the top plate 18 is configured to be detachably assembled with the front shell 5 and the rear shell 6. Specifically, at least two fifth buckles 181 are arranged on the top plate 18; the front shell 5 is provided with an eighth buckle slot 5d; the rear shell 6 is provided with a ninth buckle slot 6d; one fifth buckle 181 is configured to be detachably connected to the eighth buckle slot 5d; and one fifth buckle 181 is configured to be detachably connected to the ninth buckle slot 6d.

The energy storage housing 1 further includes a guide slot 16; the guide slot 16 is provided in one side of the energy storage housing 1 located on the second supporting plate 13; a guide plate 5e is arranged at a corresponding position on the front shell 5 or the rear shell 6; and the guide plate 5e is configured to slide along the guide slot 16. Specifically, the guide plate 5e is arranged on the front shell 5. When the front shell 5 is assembled to the energy storage housing 1, the guide plate 5e slides along the guide slot 16 to ensure that mounting positions of the front shell 5 and the energy storage housing 1 are correct, and then the front shell 5 and the rear shell 6 are assembled.

In this embodiment, one side of the accommodating cavity 7 is provided with an air inlet 71, and the other side of the accommodating cavity 7 is provided with an air outlet 72. A heat dissipation channel 73 is arranged between the air inlet 71 and the air outlet 72. A heat dissipation fan 74 is arranged at the air outlet 72. The heat dissipation fan 74 is used to drive air to pass through the air inlet 71, the heat dissipation channel 73 and the air outlet 72 in turn, and to dissipate heat of the batteries 21 and the battery compartments 11. An inverter 114 is arranged above the battery compartments 11. The inverter 114 is electrically connected with the batteries 21. Several heat dissipation sheets 115 are arranged on the inverter 114. A guard plate 116 is arranged below the battery compartments 11. Specifically, the energy storage power supply further includes a control circuit board 8. The control circuit board 8 is electrically connected with the batteries 21. The control circuit board 8 is located in the accommodating cavity 7. The control circuit board 8 is connected with the energy storage housing 1/front shell 5/rear shell 6. By means of the above structure, the installation of the inverter and the control circuit board is effectively achieved. The inverter can convert direct current of the batteries into alternating current and output the alternating current to electronic equipment for use. Furthermore, the heat dissipation sheets can dissipate the heat generated by the inverter during operation, so as to reduce the operating temperature of the inverter and improve the operating stability of the inverter. Further, the heat dissipation fan can be used for dissipating heat of the batteries and dissipating heat of the control circuit board and the inverter. The heat in the energy storage power supply is dissipated to the outside, so as to reduce the overall temperature of the energy storage power supply, which further improves the heat dissipation performance and safety of the energy storage power supply.

In this embodiment, the side plate 17 is arranged on one side of a cooling fan 74, and the air outlet 72 is provided in the side plate 17.

By the arrangement of all the above housing structures, the energy storage power supply is basically connected and buckled using the buckle structures during production and assembling. This not only facilitates disassembling and assembling, but also plays a positioning role, thereby avoiding assembling errors of the housing, improving the yield and assembling efficiency, reducing use of screws, and further reducing the costs. A screwing procedure is removed from product assembling procedures, thus effectively saving manpower and material resources to reduce the costs.

To improve the working efficiency of the control circuit board 8, the control circuit board 8 includes a first circuit board 81, a second circuit board 82, and a third circuit board 83. The energy storage housing 1 includes a first side of the first supporting plate 12 away from the second supporting plate 13, a second side of the second supporting plate 13 away from the first supporting plate 12, and a third side and a fourth side which are arranged in the preset axial direction and adjacent to the first side and the second side; the energy storage power supply includes a first circuit board 81 arranged on the first side, a second circuit board 82 arranged on the second side, and a third circuit board 83 arranged on the third side; two ends of the third circuit board 83 are respectively adjacent to the first supporting plate 12 and the second supporting plate 13; the front shell 5 is located on the fourth side; and the rear shell 6 is located on the third side and on one side of the third circuit board 83 away from the energy storage housing 1. By separately arranging the three circuit boards on the three sides of the energy storage housing 1, a space is properly used, and the circuit boards can be further electrically connected to the batteries 21 and other electrical components, thereby reducing the costs.

Specifically, the inverter 114 is electrically connected to the first circuit board 81. The inverter 114 and the first circuit board 81 are arranged on the first supporting plate 12. The lighting device 57 is electrically connected to the second circuit board 82. The second circuit board 82 is arranged on one side of the second supporting plate 13 away from the first supporting plate 12. The first circuit board 81 is opposite to the second circuit board 82, and the second circuit board 82 is electrically connected to the first circuit board 81. The first electrode plate 3 and the second electrode plate 4 are electrically connected to the first circuit board 81.

To facilitate use and adjustment of the energy storage power supply, the energy storage power supply further includes a port component 84 and a control component 85. Both the port component 84 and the control component 85 are electrically connected to the third circuit board 83, and the rear shell 6 is provided with a hole 6e. The port component 84 and the control component 85 are arranged in the hole 6e in a penetrating manner. The third circuit board 83 is configured to be electrically connected to the first circuit board 81. The port component 84 includes an output port such as a Type-C port and a Universal Serial Bus (USB) port, a jack for connecting an external power supply for charging, a jack for outputting power, and the like. The control component 85 includes a power switch, a direct current/alternating current selector switch, and the like.

Specifically, the energy storage housing 1 is provided with a first mounting portion 191. The first mounting portion 191 is arranged on one side of the first supporting plate 12 away from the second supporting plate 13. The first mounting portion 191 is a groove structure with an opening, so that the first circuit board 81 can be mounted into the groove structure from the opening, thereby increasing the mounting speed of the first circuit board 81, reducing used screws or bolts, eliminating the screwing procedure, and improving the assembling speed.

The second circuit board 82 is arranged on one side of the second supporting plate 13 away from the first supporting plate 12. Specifically, the energy storage housing 1 is provided with a first fixing portion 192. A hole is provided in a position, corresponding to the first fixing portion 192, on the second circuit board 82, so as to facilitate a screw or a bolt to be inserted into the hole and screwed with the first fixing portion 192, thereby fixing the second circuit board 82 on the side of the second supporting plate 13 away from the first supporting plate 12. To improve the mounting efficiency of the second circuit board 82, two first limiting portions 193 are further arranged on the side of the second supporting plate 13 away from the first supporting plate 12. The first limiting portions 193 are arranged in parallel. To mount the second circuit board 82, an edge of one side of the second circuit board 82 resists against the two first limiting portions 193, to ensure that the hole in the second circuit board 82 is aligned with the first fixing portions 192 to facilitate screwing or bolting. Specifically, the first fixing portions 192 are fixing columns arranged on the energy storage housing 1, and the fixing columns are provided with opening structures with internal threads. This setting can achieve quick positioning during the mounting of the second circuit board 82, making it convenient for fixing with a screw or a bolt and improving the mounting efficiency.

In this embodiment, since a light-emitting element 571 is arranged in the lighting device 57, a large amount of heat will be generated. The heat needs to be dissipated to avoid affecting the impact on normal operation of the energy storage power supply or the light-emitting element 571. A heat dissipation fin 575 is arranged in the lighting device 57. The heat dissipation fin 575 is arranged at one end of the energy storage housing 1. A lighting housing 573 is arranged on one side of the heat dissipation fin 575 away from the energy storage housing 1, so as to dissipate the heat generated by the light-emitting element 571. Specifically, the energy storage housing 1 is provided with a second mounting portion 194, and the heat dissipation fin 575 is provided with a third mounting portion 5751 and a second limiting portion 5752 connected to the third mounting portion 5751. In this embodiment, the second mounting portion 194 is a groove structure with openings in two ends. The third mounting portion 5751 and the second limiting portion 5752 are interconnected plate-shaped structures. When the heat dissipation fin 575 is mounted to the energy storage housing 1, the third mounting portion 5751 is inserted into the second mounting portion 194 along the openings until the second limiting portion 5752 resists against one end of the second mounting portion 194, and then the heat dissipation fin 575 is mounted to a preset position of the energy storage housing 1.

In this embodiment, the third circuit board 83 is arranged on the rear shell 6. Specifically, the third circuit board 83 is provided with a hole, and a second fixing portion 6f is arranged at a position, corresponding to the hole, on the rear shell 6, and the third circuit board 83 is fixed on the rear shell 6 by screwing a screw or a bolt to the second fixing portion 6f through the hole. The second fixing portion 6f is a fixing column with an internal thread. To quickly screw the third circuit board 83 onto the rear shell 6, a supporting portion 6k is further arranged on the rear shell 6. To mount the third circuit board 83, an edge of one side of the third circuit board 83 resists against the supporting portion 6k, so that the hole in the third circuit board 83 is aligned with the second fixing portion 6f, making it convenient to connect the screw or the bolt to the second fixing portion 6f.

In this embodiment, when the front shell 5 and the rear shell 6 are mounted onto the energy storage housing 1, to ensure an accurate mounting position, the energy storage housing 1 is provided with a third limiting portion 195. A fourth limiting portion 5f is arranged at a corresponding position on the front shell 5. A fifth limiting portion 6g is arranged at a corresponding position on the rear shell 6. When the front shell 5 and the rear shell 6 are mounted onto the energy storage housing 1, the fourth limiting portion 5f and the fifth limiting portion 6g slide along the third limiting portion 195 to ensure the accurate mounting position. After the mounting is completed, a structure composed of the fourth limiting portion 5f and the fifth limiting portion 6g resists against the third limiting portion 195. Specifically, the third limiting portion 195 is of a protruding structure, and the fourth limiting portion 5f and the fifth limiting portion 6g are openings formed in side walls of the front shell 5 and the rear shell 6 respectively. During mounting, side walls of the openings slide along the protruding structure to ensure an accurate mounting position. After the mounting is completed, the protruding structure is exposed out of the openings of the front shell 5 and the rear shell 6.

The energy storage power supply further includes a strap 9. The power supply housing/front shell/rear shell is provided with a handle 91. A hanging portion 92 is arranged at the handle 91. The strap 9 is detachably connected to the hanging portion 92. By the above structure, the energy storage power supply includes the power supply housing and the strap. The power supply housing is provided with the handle. The hanging portion is arranged at the handle. The strap is detachably connected to the hanging portion. Therefore, a user can not only carry the energy storage power supply with the handle, but also easily carry the energy storage power supply with the strap. Furthermore, the strap is connected to the hanging portion at the handle, so that when slinging the energy storage power supply over the shoulder with the strap, the user can enclasp the handle under the help of an arm to fix the position of the energy storage power supply, prevent the energy storage power supply from swinging during movement of the user, and avoid the energy storage power supply from sliding off from the shoulder of the user. The stability and the safety are high. Moreover, the shoulder and the arm of the user simultaneously bear the load, so that the strength of the body can be fully mobilized, and it is labor-saving. The phenomenon of partial muscle ache can be effectively prevented, and the user can carry the energy storage power supply for a long time. Further, when the user needs to free up hands for other work, the energy storage power supply can be slung across the body through the strap to prevent slipping off.

To make a user feel more comfortable when carrying the energy storage power supply, the handle 91 is provided with seventh mounting portions 911 and silica gel strips 912 mounted on the seventh mounting portions 911. Specifically, the seventh mounting portion 911 are located on two opposite sides of the handle 91 and are of groove structures. The silica gel strips 912 are also separately arranged on two sides and are provided with convex blocks inside. The silica gel strips 912 are clamped in the groove structures to achieve quick mounting. To ensure the stability of mounting of the silica gel strips 912, glue can be applied to the seventh mounting portions 911 or sides, mounted to the seventh mounting portions 911, of the silica gel strips 912, and then the silica gel strips 912 are mounted on the seventh mounting portions 911 to achieve a firm connection. In other embodiments, the silica gel strips 912 are arranged around the handle 91.

In this embodiment, the hanging portion 92 includes a first hanging opening 921 formed in one end of the handle 91, and a second hanging opening 922 formed in the other end of the handle 91. One end of the strap 9 is detachably connected to the first hanging opening 921, and the other end of the strap 9 is detachably connected to the second hanging opening 922, so as to form a hanging space 923 for hanging by a user between the strap 9 and the handle 91. One end of the strap 9 is provided with a first hanging buckle 924, and the other end of the strap 9 is provided with a second hanging buckle 925; one end of the strap 9 is detachably connected to the first hanging opening 921 through the first hanging buckle 924; and the other end of the strap 9 is detachably connected to the second hanging opening 922 through the second hanging buckle 925. By the above structure, the energy storage power supply is reasonable in design, simple in structure and stable in connection, and detachable connection between the strap and the hanging portion is effectively achieved; furthermore, the strap and the hanging portion are detachably connected, so that mounting and storage are facilitated. For example, when the user needs to carry the energy storage power supply, the first hanging buckle of the strap can be connected to the first hanging buckle, and the second hanging buckle of the strap is connected to the second hanging opening, so as to form the hanging space for hanging by the user between the strap and the handle, and the user can sling the energy storage power supply over the shoulder through the hanging space, or sling the energy storage power supply across the body; when the user needs to store the energy storage power supply, the first hanging buckle of the strap can be separated from the first hanging opening, and the second hanging buckle of the strap can be separated from the second hanging opening, so as to separate the strap from the handle; and the energy storage power supply and the strap are respectively stored. The first hanging opening and the second hanging opening are respectively arranged at two ends of the handle, so that when the user slings the energy storage power supply over the shoulder with the strap, the user enclasps the handle under the help of the arm, so as to fix the position of the energy storage power supply, prevent the energy storage power supply from swinging during movement of the user, and avoid the energy storage power supply from sliding off from the shoulder of the user.

To improve the efficiency of arranging the front shell 5 and the rear shell 6 on the energy storage housing 1 and improve the stability after assembling, the energy storage housing 1 is further provided with a sixth limiting portion 196 and an eighth limiting portion 197. The front shell 5 is provided with a seventh limiting portion 5g corresponding to the sixth limiting portion 196, and the rear shell 6 is provided with a ninth limiting portion 6h corresponding to the eighth limiting portion 197. When the front shell 5 and the rear shell 6 are arranged on the energy storage housing 1, the seventh limiting portion 5g is located on the sixth limiting portion 196, and the ninth limiting portion 6h is located on the eighth limiting portion 197. Specifically, the sixth limiting portion 196 is arranged adjacent to the second hanging opening 922, and the eighth limiting portion 197 is arranged adjacent to the first hanging opening 921. The sixth limiting portion 196 and the eighth limiting portion 197 are of cavity structures with openings. Hanging rings forming the first hanging opening 921 and the second hanging opening 922 are detachably connected to the energy storage housing 1 through the openings. When the front shell 5 and the rear shell 6 are arranged on the energy storage housing 1, the seventh limiting portion 5g is located at the opening of the sixth limiting portion 196, and the ninth limiting portion 6h is located at the opening of the eighth limiting portion 197. Specifically, the seventh limiting portion 5g and the ninth limiting portion 6h are of protruding structures, such as plates or blocks, to block the openings and prevent the hanging rings from being separated from the energy storage housing 1. Meanwhile, in this setting, the front shell 5 and the rear shell 6 can be quickly positioned when mounted at the energy storage housing 1, thereby facilitating the mounting and improving the mounting efficiency and the stability after assembling.

In this embodiment, an adjustment device is further arranged on the strap to adjust the length of the strap. By the above structure, the user can adjust the length of the strap through the adjustment device, so that the strap can adapt to the figure of the user, which greatly improves the generality and adaptability of the energy storage power supply.

To improve the comfort level of a strap 9, in this embodiment, a width of the strap 9 can be in a range of 10 mm to 60 mm, a thickness of the strap can be in a range of 0.5 mm to 5 mm, and an adjustable length range of the strap 9 can be 500 mm to 1900 mm. Within this size range, when a user uses the strap 9, the body of the user will not be tightened by the strap 9 or the body skin will not be injured. Furthermore, the strap has a strength, which can support the weight of the energy storage power supply. To meet requirements of different users for a length of the strap 9, the adjustable length range of the strap 9 can be 500 mm to 1900 mm. Within this range, it can meet different length use needs of most users, thereby enhancing a user experience. To facilitate a user to carry the handle 91 to reduce a pressure on the shoulders and the back when using the strap 9, in this embodiment, a ratio of the length of the strap 9 to the length of the handle 91 can be in a range of 1:3 to 1:10, making it convenient for the user to carry the strap in a hand or on the back.

In this embodiment, a light-transmittance lampshade 93 and a night lamp are further arranged on the front shell/rear shell. The lampshade 93 is foldable. The night lamp is arranged in the lampshade 93. A longitudinal cross section of the lampshade 93 is a waveform, and the lampshade 93 is foldable at a wave crest 931 and wave trough 932 of the waveform. By the above structure, since the lampshade is foldable at the wave crest and the wave trough, a folding function of the lampshade is realized. When the lampshade is unfolded, the lighting brightness of the night lamp is adjusted; and furthermore, since the lampshade is foldable, when the user needs to store the energy storage power supply, the lampshade can be folded to reduce the volume of the energy storage power supply and facilitate the storage.

To improve the mounting efficiency of the light-transmittance lampshade 93 and a night lamp, in this embodiment of the present disclosure, the light-transmittance lampshade 93 and the night lamp are connected to the energy storage housing 1 or the front shell 5 or the rear shell 6 using a detachable connection structure. Specifically, in this embodiment of the present disclosure, a fourth mounting portion 5h is arranged on an outer surface of the front shell 5 corresponding to the fourth limiting portion 5f, and a fifth mounting portion 6j is arranged on an outer surface of the rear shell 6 corresponding to the fifth limiting portion 6g. When the front shell 5 and the rear shell 6 are mounted on the energy storage housing 1, the fourth mounting portion 5h and the fifth mounting portion 6j resist against each other to form a periphery that protrudes out of a surface of the housing, has a sliding chute structure, is provided with an opening in one side, and surrounds the protruding structure formed by the third limiting portion 195 of the energy storage housing 1. A mounting structure corresponding to the fourth mounting portion 5h and the fifth mounting portion 6j is arranged on one side of the lampshade 93 or the night lamp facing the energy storage housing 1, so that during mounting, the lampshade 93 or the night lamp can be detachably mounted at the fourth mounting portion 5h and the fifth mounting portion 6j through the sliding chute, thereby achieving quick mounting. Furthermore, screwing, bolting, gluing, or the like is not required. This improves the mounting efficiency. It is also convenient for replacement in case of a fault.

By the above structure, the arrangement of the lighting device, the night lamp and the lampshade is effectively achieved. Furthermore, since the lighting device is arranged on the side wall of the front shell/rear shell, when the user slings the energy storage power supply over the shoulder and moves, the position of the energy storage power supply can be controlled under the help of the arm to control the irradiation position of the lighting device to illuminate a far distance. In addition, the lampshade is arranged on the night lamp, so that light emitted by the night lamp arranged above the lighting device can be scattered after passing through the lampshade to illuminate places around the energy storage power supply. Moreover, the light is soft and not dazzling, which can create a comfortable and safe mood, so that the user experience is further improved.

In this embodiment, a storage bag 95 is further arranged on a side wall of the front shell/rear shell. The storage bag 95 is a storage string bag. By the above structure, the user can store belongings through the storage bag, and conveniently pick and place the belongings, which further improves the user experience.

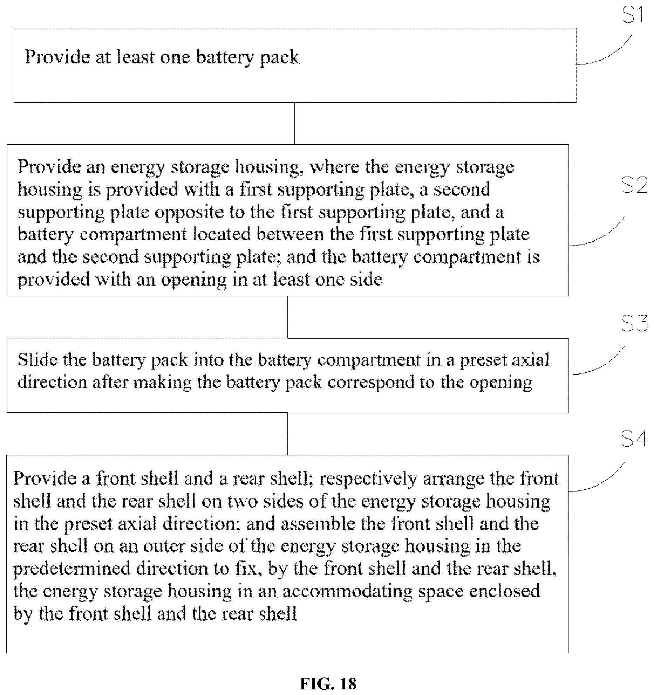

Referring to FIG. 18, an assembling method for an energy storage power supply provided by this embodiment is as follows:
Step S1: At least one battery pack is provided.

Step S2: An energy storage housing is provided. The energy storage housing is provided with a first supporting plate, a second supporting plate opposite to the first supporting plate, and a battery compartment located between the first supporting plate and the second supporting plate, wherein the battery compartment is provided with an opening in at least one side.

Step S3: The battery pack is slid into the battery compartment in a preset axial direction after making the battery pack correspond to the opening.

Step S4: A front shell and a rear shell are provided. The front shell and the rear shell are respectively arranged on two sides of the energy storage housing in the preset axial direction. The front shell and the rear shell are assembled on an outer side of the energy storage housing in the predetermined direction to fix, by the front shell and the rear shell, the energy storage housing in an accommodating space enclosed by the front shell and the rear shell.

Before or after step S2, a first circuit board 81 is mounted onto the energy storage housing 1 through a first mounting portion 191, and a second circuit board 82 is fixed on the energy storage housing 1 through a first fixing portion 192.

In step S3, the battery pack 2 is slid into the battery compartment 11 in the preset axial direction Z after corresponding to the opening 11a. Then, a first nickel strip is in spot welding or laser welding to one side of the energy storage housing 1, and a second nickel strip is in spot welding or laser welding to the other side of the energy storage housing 1, thereby achieving electrical connection between a first electrode plate 3, as well as a second electrode plate 4, and the battery pack 2. Afterwards, a third mounting portion 5751 of a heat dissipation fin 575 is aligned with a second mounting portion 194 on the energy storage housing 1, and the heat dissipation fin 575 is mounted into the energy storage housing 1. A lighting device 57 and a cooling fan are correspondingly mounted.

Before step S4, a third circuit board 83 is further screwed to the rear shell 6 through a second fixing portion 6f. Then, the front shell 5 and the rear shell 6 are separately arranged on two sides of the energy storage housing 1 in the preset axial direction Z. A guide plate 5e of the front shell 5 is slidably mounted along a guide slot 16 on the energy storage housing 1, and is then in buckled connection to the rear shell 6, to achieve buckling between the front shell 5 and the rear shell 6, thereby fixing the energy storage housing 1 in an accommodating chamber 7 enclosed by the front shell 5 and the rear shell 6. In the process of mounting the front shell 5 and rear shell 6 onto the energy storage housing 1, various limiting portions are aligned and mounted. If the mounting is successful, it indicates that the components are mounted correctly and the mounted structures are firm. If the mounting fails, it indicates that the components are mounted wrongly and need to be adjusted. Afterwards, a side plate 17 and a chamber cover body 1014 are clamped and mounted at the front shell 5, the rear shell 6, and two ends of the energy storage housing 1, and a top plate 18 is buckled on the front shell 5 and rear shell 6, thus completing the assembling of a housing of the energy storage power supply. Afterwards, a night lamp is arranged in a sliding chute structure, formed along a fourth mounting portion 5h and a fifth mounting portion 6j, in a lampshade 93. The night lamp and the lampshade 93 are mounted onto the energy storage power supply, thereby achieving the mounting of the energy storage power supply.

Through the design of the above-mentioned housing structure, the structure is simple, so that the assembling process of the housing of the energy storage power supply is easy, which effectively improves the assembling efficiency of the product. Preliminary mounting can be achieved with a fewer of screws or bolts, so that the costs are reduced, and the assembling efficiency is improved. Movement caused by screwing is avoided, so that a disqualification rate is lowered; the production costs of the product are reduced; and the competitiveness is improved. Meanwhile, when some internal parts are damaged or faulted, the product can be easily disassembled to replace the damaged or faulty parts and is then reassembled, thereby improving the efficiency of disassembling, assembling, and replacement.

Beneficial effects of the present disclosure are as follows: According to the energy storage power supply provided by the present disclosure, the battery compartment provided with the opening in one side is arranged on the energy storage housing, and the battery pack is slid into the battery compartment from the opening in the preset axial direction, so that mounting is facilitated, and a mounting efficiency is improved. The front shell and the rear shell are respectively mounted on two sides of the energy storage housing and are assembled by detachable connection, and preliminary mounting can be achieved with a fewer of screws or bolts, so that the costs are reduced, and the assembling efficiency is improved. Movement caused by screwing is avoided, so that a disqualification rate is lowered; the production costs of the product are reduced; and the competitiveness is improved.

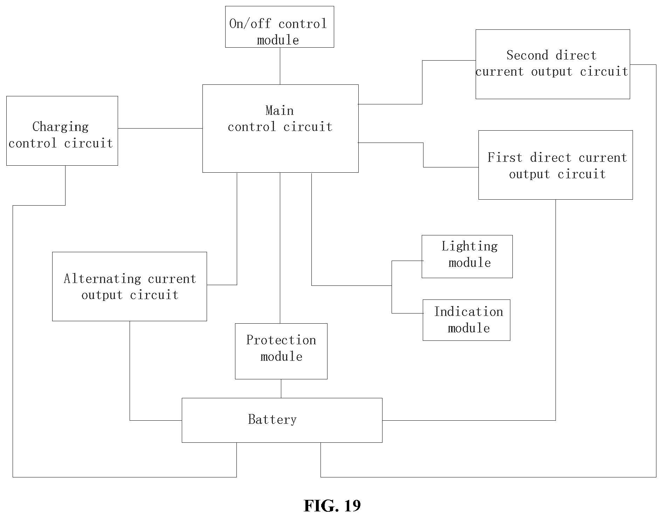

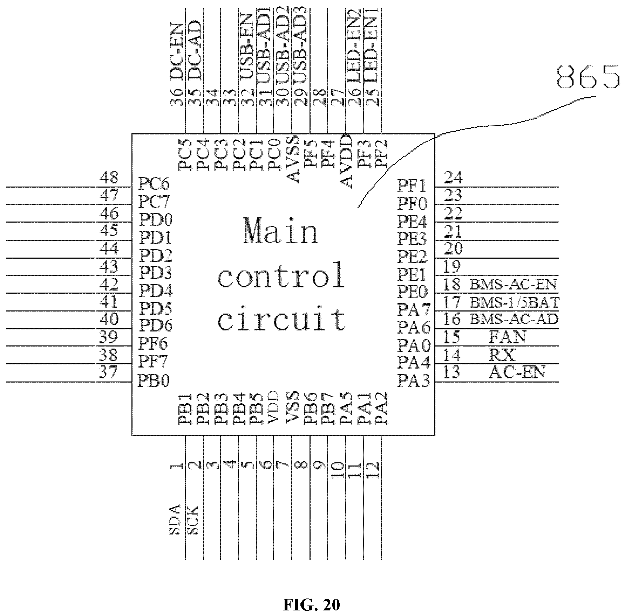

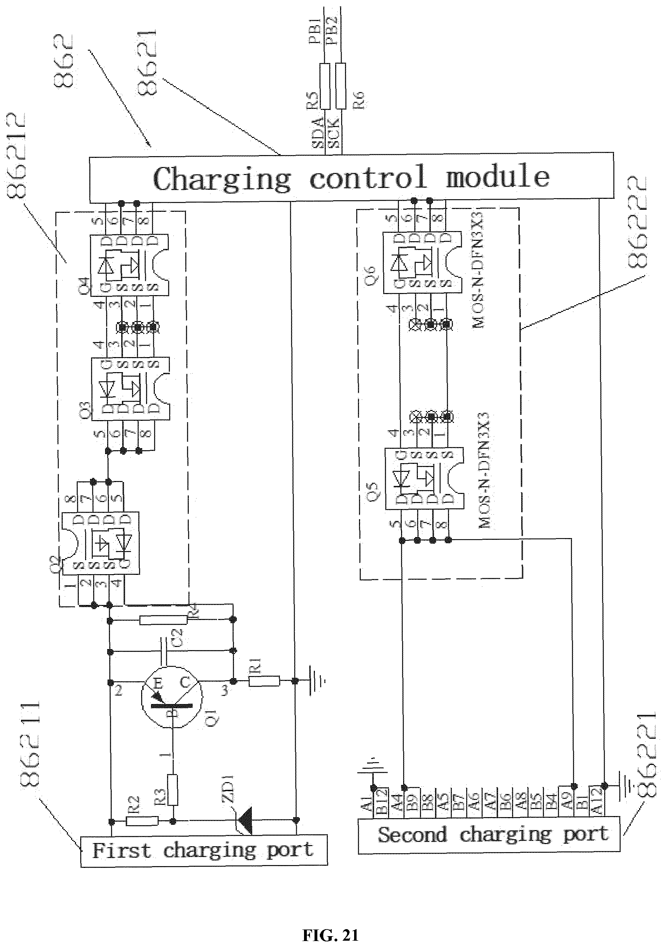

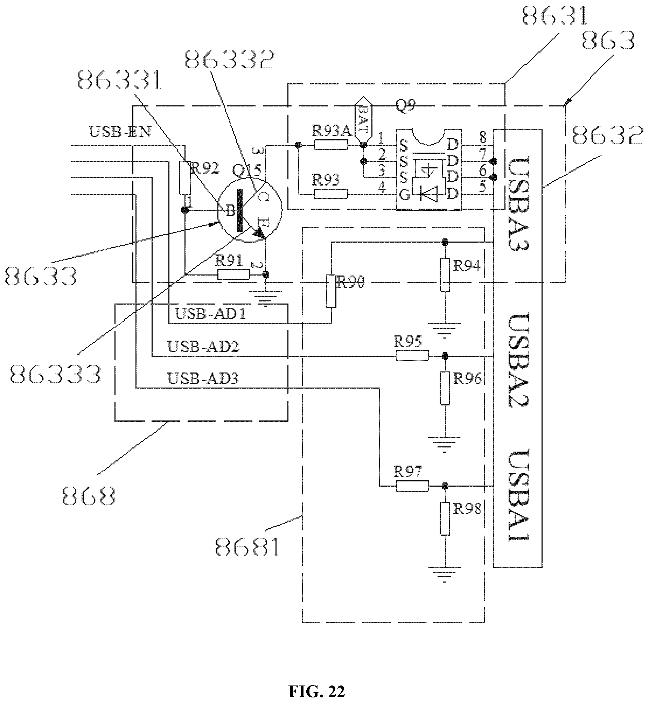

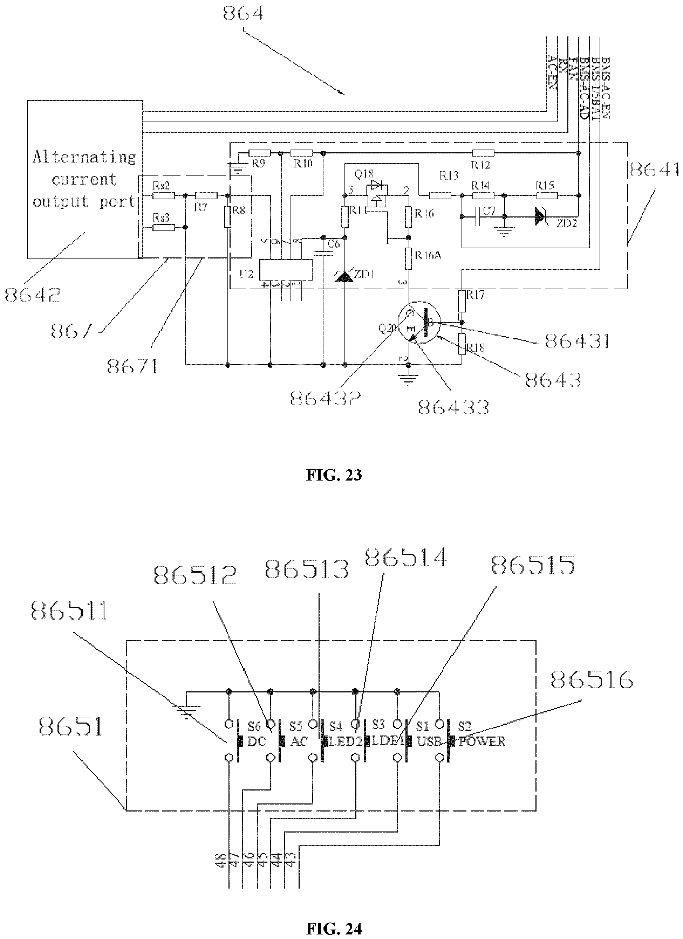

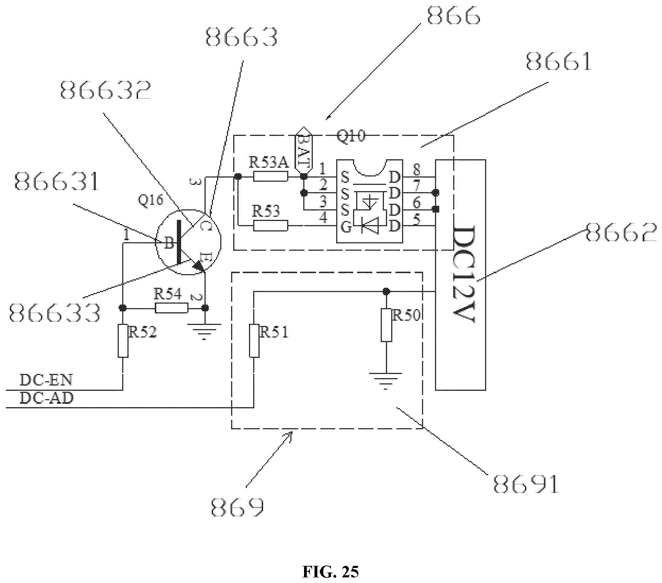

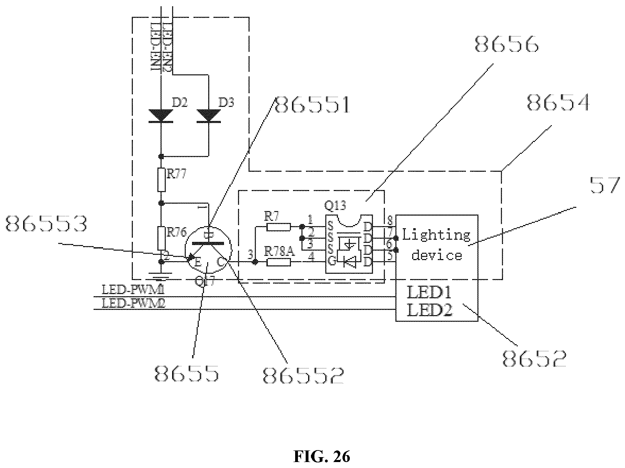

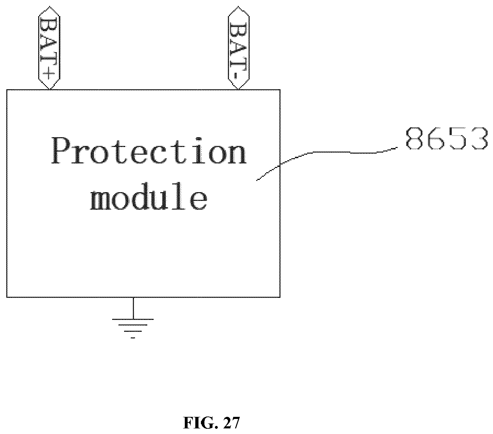

Referring to FIG. 19 to FIG. 27, in this embodiment, the control circuit board 8 includes a driving circuit of the energy storage power supply. The driving circuit includes a charging control circuit 862, a first direct current output circuit 863, an alternating current output circuit 864, and a main control circuit 865. It can be understood that the energy storage power supply can be a portable energy storage (PES), such as an "outdoor mobile power supply" , which is used as a backup power supply or an emergency power supply and can include an energy storage housing 1, batteries 21 arranged in the energy storage housing 1, and a control circuit board 8. The driving circuit can be at least partially arranged on the control circuit board 8, and the energy storage housing 1 can be provided with a port component 84, a control component 85, and the like which are electrically connected to the driving circuit.

In this embodiment, the battery 21 is configured to output a voltage of the battery 21. The charging control circuit 862 is configured to be electrically connected to an external power supply and the battery 21 to receive an external voltage to charge the battery 21. The first direct current output circuit 863 is electrically connected to the battery 21 and is configured to receive the voltage of the battery 21 and output a first direct current voltage. The alternating current output circuit 864 is electrically connected to the battery 21 and is configured to receive the voltage of the battery 21 and output an alternating current supply voltage. The main control circuit 865 is electrically connected to the battery 21, the charging control circuit 862, the first direct current output circuit 863, and the alternating current output circuit 864 and is configured to: control operations of the charging control circuit 862, the first direct current output circuit 863, and the alternating current output circuit 864 and detect at least one of the first direct current output circuit 863 and the alternating current output circuit 864 to obtain a load condition of at least one of the first direct current output circuit 863 and the alternating current output circuit 864, wherein when a duration at which at least one of the first direct current output circuit 863 and the alternating current output circuit 864 is in an unloaded state exceeds a preset time value, the main control circuit 865 controls at least one of the first direct current output circuit 863 and the alternating current output circuit 864 to be turned off. Through the above structure, the main control circuit 865 can detect at least one of the first direct current output circuit 863 and the alternating current output circuit 864 to obtain the load condition of at least one of the first direct current output circuit 863 and the alternating current output circuit 864. When the duration at which at least one of the first direct current output circuit 863 and the alternating current output circuit 864 is in the unloaded state exceeds the preset time value, the main control circuit 865 controls at least one of the first direct current output circuit 863 and the alternating current output circuit 864 to be turned off, thereby solving the problem of high power consumption if the alternating current output circuit 864 and the first direct current output circuit 863 in the energy storage power supply are in the unloaded state. The main control circuit of the energy storage power supply can precisely monitor and control energy consumptions of different modules and cancel a mechanical switch to achieve low-power operation, which prolongs the service life of the entire power supply and achieve a better use experience.

In this embodiment, the main control circuit 865 is configured to detect the first direct current output circuit 863 and the alternating current output circuit 864 to obtain a load condition of the first direct current output circuit 863 and a load condition of the alternating current output circuit 864; the preset time value includes a first preset time value; when a duration at which the alternating current output circuit 864 is in an unloaded state exceeds the first preset time value, the main control circuit 865 controls the alternating current output circuit 864 to be turned off; the preset time value includes a second preset time value; and when a duration at which the first direct current output circuit 863 is in an unloaded state exceeds the second preset time value, the main control circuit 865 controls the first direct current output circuit 863 to be turned off. The first preset time value can be 3 s, 4 s, or another time value. Specifically, when the duration at which the alternating current output circuit 864 is in the unloaded state is greater than 3 s, the main control circuit 865 controls the alternating current output circuit 864 to be turned off. The first preset time value can also be 4 s. Specifically, when the duration at which the alternating current output circuit 864 is in the unloaded state is greater than 4 s, the main control circuit 865 controls the alternating current output circuit 864 to be turned off. The second preset time value can be 3 s, 4 s, or another time value. Specifically, when the duration at which the first direct current output circuit 863 is in the unloaded state is greater than 3 s, the main control circuit 865 controls the first direct current output circuit 863 to be turned off. The second preset time value can also be 4 s. Specifically, when the duration at which the first direct current output circuit 863 is in the unloaded state is greater than 4 s, the main control circuit controls the first direct current output circuit 863 to be turned off. Through the above structure, the preset time value can be decreased, so that the main control circuit 865 can quickly detect the load condition of the first direct current output circuit 863 and the load condition of the alternating current output circuit 864.

In this embodiment, the driving circuit of the energy storage power supply further includes a second direct current output circuit 866; the second direct current output circuit 866 is electrically connected to the battery 21 and is configured to: receive the voltage of the battery 21 and output a second direct current voltage. The first direct current voltage is different from the second direct current voltage. For example, the first direct current voltage and the second direct current voltage may be respectively 5 V and 12 V. The main control circuit 865 is further configured to: control an operation of the second direct current output circuit 866 and detect the second direct current output circuit 866 to obtain a load condition of the second direct current output circuit 866; and when a duration at the second direct current output circuit 866 in an unloaded state exceeds a third preset time value, the main control circuit 865 controls the second direct current output circuit 866 to be turned off. The third preset time value can be 3 s, 4 s, or another time value. Specifically, when the duration at which the second direct current output circuit 866 is in the unloaded state is greater than 3 s, the main control circuit 865 controls the second direct current output circuit 866 to be turned off. The second preset time value can also be 4 s. Specifically, when the duration at which the second direct current output circuit 866 is in the unloaded state is greater than 4 s, the main control circuit 865 controls the second direct current output circuit 866 to be turned off. Through the above structure, the preset time value can be decreased, so that the main control circuit 865 can quickly detect the load condition of the second direct current output circuit 866.

In this embodiment, the alternating current output circuit 864 is configured to: receive the voltage of the battery 21 and convert the voltage of the battery 21 into the alternating current output voltage; the first direct current output circuit 863 is configured to: receive the voltage of the battery 21 and convert the voltage of the battery 21 into the first direct current voltage; and the second direct current output circuit 866 is configured to receive the voltage of the battery 21 and convert the voltage of the battery 21 into the second direct current voltage.

In this embodiment, the alternating current output circuit 864 includes an alternating current conversion module 8641 and an alternating current output port 8642; the alternating current conversion module 8641 is configured to: receive the voltage of the battery 21 and output the alternating current supply voltage; the alternating current output port 8642 is configured to output the alternating current supply voltage; the alternating current supply voltage is 110 V or 220 V; the first direct current output circuit 863 includes a first direct current conversion module 8631 and a first direct current output port 8632; the first direct current conversion module 8631 is configured to convert the voltage of the battery 21 into the first direct current voltage; the first direct current output port 8632 is configured to output the first direct current voltage; the first direct current voltage is 5 V; the first direct current output port 8632 is a USB port; the second direct current output circuit 866 includes a second direct current conversion module 8661 and a second direct current output port 8662; the second direct current conversion module 8661 is configured to convert the voltage of the battery 21 into the second direct current voltage; the second direct current output port 8662 is configured to output the second direct current voltage; and the second direct current voltage is 12 V. Through the above structure, the voltage of battery 21 is 16 V. Specifically, the alternating current conversion module 8641 receives and converts the 16 V voltage of the battery into the 110 V or 220 V alternating current voltage. Further, the 110 V or 220 V alternating current voltage can be output through the alternating current output port 8642. The 110 V alternating current voltage can be applicable to standard voltages in countries such as the United States, Canada, and Mexico and some low-power electrical appliances such as radios and lamps. The 220 V alternating current voltage is applicable to standard voltages in countries such as China, the UK, and France and high-power electrical appliances such as washing machines and air conditioners. The first direct current conversion module receives and converts the 16 V voltage of the battery into a 5 V direct current voltage. Further, the 5 V direct current voltage can be output through the first direct current output port 8632. The first direct current output port 8632 is a USB port that can provide power transmission for electronic devices such as a mobile phone, a mouse, and a keyboard. The second direct current conversion module 8661 receives and converts the 16 V voltage of the battery into a 12 V direct current voltage. Further, the 12 V direct current voltage can be output through the second direct current output port 8662, which can provide power for low-power electronic devices such as a navigator and a charger.

In this embodiment, the driving circuit of the energy storage power supply includes a first sampling circuit 867; the first sampling circuit 867 is electrically connected to the main control circuit 865 and the alternating current output circuit 864; the main control circuit 865 detects the alternating current output circuit 864 through the first sampling circuit 867 and obtains a first sampled signal; the main control circuit 865 obtains output power of the alternating current output circuit 864 according to the first sampled signal; when the output power of the alternating current output circuit 864 is less than a first preset power value, the alternating current output circuit 864 is in the unloaded state; and when the duration of the unloaded state exceeds the first preset time value, the alternating current output circuit 864 is controlled to be turned off. The first preset power value can be 50 W or another value. For example, when the first sampling circuit 867 obtains the first sampled signal by detecting the alternating current output circuit 864, the main control circuit 865 may obtain the output power of the alternating current output circuit 864 according to the first sampled signal; when the power of the alternating current output circuit 864 is less than 50 W, the alternating current output circuit 864 is in the unloaded state; when the duration of the unloaded state exceeds the first preset time value, the alternating current output circuit 864 is controlled to be turned off. Through the above structure, it effectively achieves that the main control circuit 865 controls the alternating current output circuit 864 to be turned off through the first sampling circuit 867.

In this embodiment, the driving circuit of the energy storage power supply includes a second sampling circuit 868; the second sampling circuit 868 is electrically connected to the main control circuit 865 and the first direct current output circuit 863; the main control circuit 865 detects the first direct current output circuit 863 through the second sampling circuit 868 and obtains a second sampled signal; the main control circuit 865 obtains output power of the first direct current output circuit 863 according to the second sampled signal; when the output power of the first direct current output circuit 863 is less than a second preset power value, the first direct current output circuit 863 is in the unloaded state; and when the duration of the unloaded state exceeds the second preset time value, the first direct current output circuit 863 is controlled to be turned off. The second preset power value can be 10 W or another value. For example, when the second sampling circuit 868 obtains the second sampled signal by detecting the first direct current output circuit 863, the main control circuit 865 may obtain the output power of the first direct current output circuit 863 according to the second sampled signal; when the power of the first direct current output circuit 863 is less than 10 W, the first direct current output circuit 863 is in the unloaded state; when the duration of the unloaded state exceeds the second preset time value, the first direct current output circuit 863 is controlled to be turned off. Through the above structure, it effectively achieves that the main control circuit 865 controls the first direct current output circuit 863 to be turned off through the second sampling circuit.

In this embodiment, the driving circuit of the energy storage power supply includes a third sampling circuit 869; the third sampling circuit 869 is electrically connected to the main control circuit 865 and the second direct current output circuit 866; the main control circuit 865 detects the second direct current output circuit 866 through the third sampling circuit 869 and obtains a third sampled signal; the main control circuit 865 obtains output power of the second direct current output circuit 866 according to the third sampled signal; when the output power of the second direct current output circuit 866 is less than a third preset power value, the second direct current output circuit 866 is in the unloaded state; and when the duration of the unloaded state exceeds the third preset time value, the second direct current output circuit 866 is controlled to be turned off. The third preset power value can be 15 W or another value. For example, when the third sampling circuit 869 obtains the third sampled signal by detecting the second direct current output circuit 866, the main control circuit 865 may obtain the output power of the second direct current output circuit 866 according to the third sampled signal; when the power of the second direct current output circuit 866 is less than 15 W, the second direct current output circuit 866 is in the unloaded state; when the duration of the unloaded state exceeds the second preset time value, the second direct current output circuit 866 is controlled to be turned off. Through the above structure, it effectively achieves that the main control circuit 865 controls the second direct current output circuit 866 to be turned off through the second sampling circuit 868.

In this embodiment, a quantity of the first direct current output port 8632 is multiple; a quantity of the second sampling circuit 868 corresponds to the quantity of first direct current output port 8632; each of the second sampling circuits 868 is connected between the corresponding first direct current output port 8632 and the main control circuit 865; the main control circuit 865 is configured to detect the load conditions of the plurality of first direct current output ports 8632 through the plurality of second sampling circuits 868; when any one of the first direct current output ports 8632 is in a loaded state, the main control circuit 865 controls the first direct current output circuit 863 to operate normally; and when all the first direct current output ports 8632 are in the unloaded state, the main control circuit 865 controls the first direct current output circuit 863 to be turned off. There are three first direct current output ports 8632. Further, the first direct current output ports 8632 are USBA1, USBA2, and USBA3. Correspondingly, there are three second sampling circuits 868. The second sampling circuits 868 are USB-AD1, USB-AD2, and USB-AD3. Specifically, the USB-AD1 is connected between the USBA1 and the main control circuit; the USB-AD2 is connected between the USBA2 and the main control circuit; and the USB-AD3 is connected between the USBA3 and the main control circuit. When the USBA1, the USBA2, or the USBA3 is in the loaded state, the main control circuit 865 controls the first direct current output circuit 863 to operate normally. When the three output ports USBA1, USBA2, and USBA3 are simultaneously in the unloaded state, the main control circuit controls the first direct current output circuit 863 to be turned off. Through the above structure, the three USB output ports can be arranged to simultaneously charge a plurality of sets of equipment, which improves the charging efficiency and convenience. When any USB output port is in the loaded state, the first direct current output circuit 863 will operate normally, which ensures the stability of the output ports.

In this embodiments, the first direct current output circuit 863 further includes a first switch 8633; the first switch 8633 includes a first control end 86331, a first conducting end 86332, and a first ground end 86333; the main control circuit 865 is electrically connected to the first control end 86331; the first direct current conversion module 8631 and the first direct current output ports 8632 are all electrically connected to the first conducting end 86332; the first ground end 86333 is electrically connected to a ground; and the first switch 8633 is configured to control conversion of the first direct current conversion module 8631 and outputs of the first direct current output ports 8632. The first switch 8633 is a first NPN type transistor; the first control end 86331 can be configured to control on/off of a circuit in the main control circuit; the first conducting end 86332 can be configured to output a current to the first direct current conversion module 8631 and the first direct current output ports 8632; and the first ground end 86333 can be connected to the ground. Through the above structure, the stability of the circuit can be improved.

In this embodiment, the second sampling circuit 868 includes a plurality of second sampling resistor groups 8681; the main control circuit 865 detects the first direct current output circuit 863 and obtains the second sampled signal through the second sampling resistor groups 8681; and the main control circuit 865 is configured to control, according to the detected second sampled signal, the first switch 8633 to be turned on or turned off. There are three second sampling resistor groups 8681, including: a sampling resistor group USBA1, a sampling resistor group USBA2, and a sampling resistor group USBA3. Further, the sampling resistor group USBA1 includes a resistor R1 and a resistor R2; the resistor R1 is connected to the main control circuit; the resistor R2 is connected to the ground; and the resistor R1 and the resistor R2 are both connected to the USBA1. The sampling resistor group USBA2 includes a resistor R3 and a resistor R4; the resistor R3 is connected to the main control circuit; the resistor R4 is connected to the ground; and the resistor R3 and the resistor R4 are both connected to the USBA2. The sampling resistor group USBA3 includes a resistor R5 and a resistor R6; the resistor R5 is connected to the main control circuit 865; the resistor R6 is connected to the ground; and the resistor R5 and the resistor R6 are both connected to the USBA3.

In this embodiment, the second direct current output circuit 866 includes a second switch 8663; the second switch includes a second control end 86631, a second conducting end 86632, and a second ground end 86633; the main control circuit 865 is electrically connected to the second control end 86631; the second direct current conversion module 8661 and the second direct current output port 8662 are both electrically connected to the second conducting end 86632; the second ground end 86633 is electrically connected to the ground; and the second switch 8663 is configured to control conversion of the second direct current conversion module 8661 and an output of the second direct current output port 8662. The second switch 8663 is a second NPN type transistor; the second control end 86631 can be configured to control on/off of a circuit in the main control circuit 865; the second conducting end 86632 can be configured to output a current to the second direct current conversion module 8661 and the second direct current output port 8662; and the second ground end 86633 can be connected to the ground. Through the above structure, the stability of the circuit can be improved.

In this embodiment, the third sampling circuit 869 includes a third sampling resistor group 8691; the main control circuit 865 detects the second direct current output circuit 866 and obtains the third sampled signal through the third sampling resistor group 8691; and the main control circuit 865 is configured to control, according to the detected third sampled signal, the second switch 8663 to be turned on or turned off. The third sampling resistor group 8691 includes a resistor R7 and a resistor R8; the resistor R7 is connected to the main control circuit 865; the resistor R8 is connected to the ground; and the resistor R7 and the resistor R8 are both connected to the second direct current output port 8662.

In this embodiment, the alternating current output circuit 864 further includes a third switch 8643; the third switch 8643 includes a first control end 86431, a third conducting end 86432, and a third ground end 86433 the main control circuit 865 is electrically connected to the third control end 86431; the alternating current conversion module 8641 and the alternating current output port 8642 are both electrically connected to the third conducting end 86432; the third ground end 86433 is electrically connected to the ground; and the third switch 8643 is configured to control conversion of the alternating current conversion module 8641 and an output of the alternating current output port 8642. The third switch 8643 is a third NPN type transistor; the third control end 86431 can be configured to control on/off of a circuit in the main control circuit 865; the third conducting end 86432 can be configured to output a current to the third direct current conversion module 8641 and the third direct current output port 8642; and the third ground end 86433 can be connected to the ground. Through the above structure, the stability of the circuit can be improved.

In this embodiment, the first sampling circuit 867 includes a first sampling resistor group 871; the main control circuit 865 detects the alternating current output circuit 864 and obtains the first sampled signal through the first sampling resistor group 871; and the main control circuit 865 is configured to control, according to the detected first sampled signal, the third switch 8643 to be turned on or turned off.

In this embodiment, the charging control circuit 862 includes a first charging port 86211, a first charging detection module 86212, a second charging port 86221, a second charging detection module 86222, and a charging control module 8621; the external voltage includes a first external voltage and a second external voltage; the first charging port 86211 is configured to receive the first external voltage; the first charging detection module 86212 is connected between the first charging port 86211 and the charging control module 8621; the second charging port 86221 is configured to receive the second external voltage; the second charging detection module 86222 is connected between the second charging port 86221 and the charging control module 8621; the charging control module 8621 is electrically connected to the main control circuit 865 and the battery 21 to charge the battery 21 through the first external voltage or the second direct current voltage; the first charging port 86211 is a direct current charging port; the first external voltage is 12 V; the second charging port 86221 is a Type-C charging port; and the second external voltage is 5 V. Through the above structure, when the first charging port 86211 receives the first external voltage of 12 V, the first charging detection module 86212 detects the input voltage and transmits the same to the charging control module 8621 to charge the battery 21. When the second charging port 86221 receives the second external voltage of 5 V, the second charging detection module 86222 detects the input voltage and transmits the same to the charging control module 8621 to charge the battery. The existence of the second charging detection module 86222 effectively achieves a function of detecting input power and transmitting the same to the charging control module 8621.

In this embodiment, the driving circuit of the energy storage power supply further includes a lighting module; and the lighting module is electrically connected to the main control circuit 865 and is configured to emit lighting light under the control of the main control circuit 865. The driving circuit of the energy storage power supply further includes an on/off control module 8651; the on/off control module 8651 is electrically connected to the main control circuit 865 and is operated by a user to control on and off states of the driving circuit, the lighting module, the direct current output circuits, the alternating current output circuit, and the like. The driving circuit of the energy storage power supply further includes an indication module 8652; the indication module is electrically connected to the main control circuit 865 and is configured to send an indication signal under the control of the main control circuit 865 to indicate working conditions of the charging control module, the lighting module, the direct current output circuits, and the alternating current output circuit. The driving circuit of the energy storage power supply further includes a protection module 8653; the protection module is electrically connected to the main control circuit 865 and is configured to: detect a working state of the driving circuit and output a detected signal to the main control circuit 865; and the main control circuit 865 analyzes, according to the detection signal, whether the driving circuit is in an abnormal working state and controls, when the driving circuit is in the abnormal working state, the driving circuit to be turned off. Through the above structure, the indication module 8652 includes two indicator lamps: LED1 and LED2. When the charging control module 8621 is in a working state, the energy storage power supply is in a charging mode, and the LED1 is turned on. When the lighting module, the direct current output circuits, and the alternating current output circuit are in working states, the energy storage power supply is in a discharging mode, and the LED2 is turned on. The arrangement of the indicator lamps can visually indicate a working condition of the energy storage power supply, making it convenient for the user and an operator to understand an operating situation. The protection module 8653 is connected to positive and negative electrodes of the battery. When the driving circuit is under an overvoltage or overcurrent, or is overheated, the protection module 8653 will control the driving circuit to be turned off to protect the energy storage power supply, which effectively protects the performance safety of the energy storage power supply and prolongs the service life of the energy storage power supply.

In this embodiment, the lighting module 8654 includes a fourth switch 8655, a lighting conversion module 8656, and the lighting device 57; the fourth switch includes a fourth control end 86551, a fourth conducting end 86552, and a fourth ground end 86553; the main control circuit 865 is electrically connected to the fourth control end 86551; the lighting conversion module 8656 and the lighting device 57 are both electrically connected to the fourth conducting end 86552; the fourth ground end 86553 is electrically connected to the ground; and the fourth switch 8655 is configured to control conversion of the lighting conversion module 8656 and lighting of the lighting device 57. The fourth switch 8655 is a fourth NPN type transistor; the fourth control end 86551 can be configured to control on/off of a circuit in the main control circuit 865; the fourth conducting end 86552 can be configured to output a current to the lighting conversion module 8656 and the lighting device 57; and the fourth ground end 86553 can be connected to the ground. Through the above structure, the stability of the circuit can be improved.

In this embodiment, the on/off control module 8651 includes a first button 86511, a second button 8512, a third button 86513, a fourth button 86514, a fifth button 86515, and a sixth button 86516; the first button 86511 is configured to control on and off states of the driving circuit; the second button 8512 is configured to control on and off states of the first direct current output circuit; the third button 86513 is configured to control on and off states of the second direct current output circuit; the fourth button 86514 is configured to control on and off states of the alternating current output circuit; the fifth button 86515 is configured to control on and off states of the lighting module; and the sixth button 86516 is configured to control on and off states of the charging control circuit 862. The first button 86511 is connected to the main control circuit 865 to control turning on and turning off of the charging control circuit 862; the second button 8512 is connected to the main control circuit 865 to control turning on and turning off of the alternating current output circuit 864; the third button 86513 is connected to the main control circuit 865 to control turning on and turning off of the first direct current output circuit 863; the fourth button 86514 is connected to the main control circuit 865 to control turning on and turning off of the second direct current output circuit 866; the fifth button 86515 is connected to the main control circuit 865 to control turning on and turning off of the lighting module 8654; and the sixth button 86516 is connected to the main control circuit 865 to control turning on and turning off of the indication module 8652. Through the above structure, all the modules of the energy storage power supply are provided with the corresponding switch buttons, which facilitates quickly cutting off the power of the corresponding modules in emergency cases, and it is convenient for the user to control and manage each module.

## Claims

1. An energy storage power supply, **characterized in that**, comprising:
at least one battery pack (2);
an energy storage housing (1), provided with a first supporting plate (12), a second supporting plate (13) opposite to the first supporting plate (12), and a battery compartment (11) located between the first supporting plate (12) and the second supporting plate (13), wherein the battery compartment (11) is provided with an opening (111) in at least one side; the opening (111) is configured to allow the at least one battery pack (2) to slide into the battery compartment (11) in a preset axial direction;
wherein the energy storage housing (1) comprises a first side of the first supporting plate (12) away from the second supporting plate (13), a second side of the second supporting plate (13) away from the first supporting plate (12), and a third side and a fourth side which are arranged in the preset axial direction and adjacent to the first side and the second side;
a first circuit board (81), arranged on the first side;
a second circuit board (82), arranged on the second side;
a third circuit board (83), arranged on the third side; two ends of the third circuit board (83) are respectively adjacent to the first supporting plate (12) and the second supporting plate (13); and
a front shell (5) and a rear shell (6), wherein the front shell (5) is located on the fourth side; and the rear shell (6) is located on the third side and on one side of the third circuit board (83) away from the energy storage housing (1);
wherein the front shell (5) and the rear shell (6) are respectively located on two sides of the energy storage housing (1) in the preset axial direction; the front shell (5) and the rear shell (6) are configured to be detachably assembled with the energy storage housing (1); and the energy storage housing (1), the first circuit board (81), the second circuit board (82) and the third circuit board (83) are fixed in an accommodating chamber enclosed by the front shell (5) and the rear shell (6).

2. The energy storage power supply according to claim 1, **characterized in that** the battery pack (2) comprises at least two batteries; the battery compartment (11) comprises at least two battery mounting positions (117); the at least two battery mounting positions (117) are communicated to the opening (111); and the batteries are arranged at the battery mounting positions (117);
wherein a baffle plate is arranged in the battery compartment; the baffle plate (118) is arranged between the two battery mounting positions (117); and a length of the baffle plate (118) in the preset axial direction is less than a length of a side wall of the battery compartment (11) in the preset axial direction.

3. The energy storage power supply according to claim 1, **characterized in that** the front shell (5) and the rear shell (6) are configured to be detachably assembled.

4. The energy storage power supply according to claim 3, **characterized in that** the front shell (5) is provided with a first buckle slot (5a), and the rear shell is provided with a first buckle (6a); and the first buckle (6a) and the first buckle slot (5a) are configured to be detachably connected to each other.

5. The energy storage power supply according to claim 4, **characterized in that** the energy storage power supply comprises a chamber cover body (1014) arranged in a lengthwise direction of the first supporting plate (12) or the second supporting plate (13); the chamber cover body (1014) is configured to be detachably connected to the energy storage housing (1); at least two second buckles (1016) are arranged on the chamber cover body; at least two second buckle slots (1017) are provided in the energy storage housing (1); and the second buckles (1016) and the second buckle slots (1017) are configured to be detachably connected to each other;
wherein a third buckle slot (5b) communicated to one of the second buckle slots (1017) is provided in the front shell (5), and a fourth buckle slot (6b) communicated to the other second buckle slot (1017) is provided in the rear shell (6); when the chamber cover body (1014) is assembled to the energy storage housing (1), one of the second buckles (1016) passes through the third buckle slot (5b) and one of the second buckle slots (1017) and is connected to the front shell (5) and the energy storage housing (1); and the other second buckle (1016) passes through the fourth slot (6b) and the other second buckle slot (1017) and is connected to the rear shell (6) and the energy storage housing (1).

6. The energy storage power supply according to claim 4, **characterized in that** the energy storage power supply further comprises a side plate (17) arranged in a lengthwise direction of the first supporting plate (12) or the second supporting plate (13); the side plate (17) is configured to be detachably connected to the energy storage housing (1); at least one third buckle (171) and at least two fourth buckles (172) are arranged on the side plate; at least one fifth buckle slot (15) is provided in the energy storage housing (1); at least one sixth buckle slot (5c) is provided in the front shell (5); at least one seventh buckle slot (6c) is provided in the rear shell (6); the third buckle (171) is configured to be detachably connected to the fifth buckle slot (15); the fourth buckle (172) is configured to be detachably connected to the sixth buckle slot (5c); and one of the fourth buckles (172) is configured to be detachably connected to the seventh buckle slot (6c).

7. The energy storage power supply according to claim 3, **characterized in that** the energy storage power supply further comprises a top plate (18); and the top plate (18) is configured to be detachably assembled with the front shell (5) and the rear shell (6).

8. The energy storage power supply according to claim 7, **characterized in that** at least two fifth buckles (15) are arranged on the top plate (18); the front shell (5) is provided with an eighth buckle slot (5d); the rear shell (6) is provided with a ninth buckle slot (6d); one fifth buckle (181) is configured to be detachably connected to the eighth buckle slot (5d); and one fifth buckle (181) is configured to be detachably connected to the ninth buckle slot (6d);
wherein the energy storage housing (1) further comprises a guide slot (16); the guide slot (16) is provided in one side of the energy storage housing (1) located on the second supporting plate (13); a guide plate (5e) is arranged at a corresponding position on the front shell (5) or the rear shell (6); and the guide plate (5e) is configured to slide along the guide slot (16).

9. The energy storage power supply according to claim 1, **characterized in that** the energy storage housing (1) is provided with a first mounting portion (191); the first mounting portion (191) is arranged on one side of the first supporting plate (12) away from the second supporting plate (13); and the first circuit board (81) and the first mounting portion (191) are configured to be detachably connected to each other.

10. The energy storage power supply according to claim 1, **characterized in that** the energy storage housing (1) is provided with a first fixing portion (192); the first fixing portion (192) is arranged on one side of the second supporting plate (13) away from the first supporting plate (12); the first fixing portion (192) is configured to be detachably connected to the second circuit board (82); and a first limiting portion (193) configured to resist against and locate the second circuit board (82) is further arranged on one side of the second supporting plate (13) away from the first supporting plate (12).

11. The energy storage power supply according to claim 1, **characterized in that** a second mounting portion (194) is arranged on the energy storage housing (1); the energy storage power supply further comprises a lighting device (57) configured to be electrically connected to the second circuit board (82); the lighting device (57) comprises a heat dissipation fin (575) configured to be detachably connected to the second mounting portion (194); the heat dissipation fin (575) comprises a third mounting portion (5751) and a second limiting portion (5752) connected to the third mounting portion (5751); the third mounting portion (5751) is configured to be detachably connected to the second mounting portion (5752); and the second limiting portion (5752) is configured to resist against the second mounting portion (194) to limit a mounting position of the heat dissipation fin (575);
wherein the energy storage housing (1) further comprises a lighting chamber (1011); the lighting chamber (1011) is provided with a first light outlet (1012); the second mounting portion (194) is arranged in the lighting chamber (1011); the lighting device (57) is arranged in the lighting chamber (1011); the lighting device (57) further comprises a light-emitting element (571) and a condensing lens (572) arranged on the heat dissipation fin (575); a light-emitting surface of the light-emitting element (571) is arranged in a manner of facing the condensing lens (572) and the first light outlet (1012); the condensing lens (572) is configured to condense light emitted by the light-emitting element (571) to form a small beam with a long lighting distance; and the second circuit board (82) is configured to be electrically connected to the first circuit board (81).

12. The energy storage power supply according to claim 1, **characterized in that** a second fixing portion (6f) is arranged on one side of the rear shell (6) facing the front shell (5); a hole is provided in the third circuit board (83); the third circuit board (83) and the second fixing portion (6f) are configured to be detachably connected to each other; and a supporting portion (6k) configured to resist against and locate the third circuit board (83) is further arranged on one side of the rear shell (6) facing the front shell (5).

13. The energy storage power supply according to claim 1, **characterized in that** a fourth mounting portion (5h) and a fifth mounting portion (6j) are respectively arranged on the front shell (5) and the rear shell (6); when the front shell (5) and the rear shell (6) are mounted on the energy storage housing (1), the fourth mounting portion (5h) and the fifth mounting portion (6j) resist against each other to form a mounting sliding chute; the energy storage housing (1) is further provided with a light-transmittance lampshade (93) and a night lamp; the lampshade (93) is configured to be retractable and foldable; the night lamp is arranged in the lampshade (93); the night lamp is electrically connected to the second circuit board (83); the lampshade (93) or the night lamp is provided with a mounting structure; and the mounting structure is configured to be detachably connected to the mounting sliding chute.

14. The energy storage power supply according to claim 1, **characterized in that** the energy storage power supply further comprises a handle (91) arranged on the energy storage housing (1); the handle (91) comprises a seventh mounting portion (911) and a silica gel strip (912) arranged on the seventh mounting portion (911); the energy storage power supply further comprises a strap (9); the strap (9) is configured to be detachably connected to the energy storage housing (1); a length of the strap (9) is in a range of 500 mm to 1900 mm; a width is in a range of 10 mm to 60 mm; a thickness of the strap (9) is in a range of 0.5 mm to 5 mm; and a ratio of the length of the strap (9) to a length of the handle (91) is in a range of 1:3 to 1:10.

15. An assembling method for an energy storage power supply, **characterized in that**, comprising:
providing at least one battery pack (2);
providing an energy storage housing (1), wherein the energy storage housing (1) is provided with a first supporting plate (12), a second supporting plate (13) opposite to the first supporting plate (12), and a battery compartment (11) located between the first supporting plate (12) and the second supporting plate (13), wherein the battery compartment (11) is provided with an opening (111) in at least one side; the opening (111) is configured to allow the at least one battery pack (2) to slide into the battery compartment (11) in a preset axial direction;
wherein the energy storage housing (1) comprises a first side of the first supporting plate (12) away from the second supporting plate (13), a second side of the second supporting plate (13) away from the first supporting plate (12), and a third side and a fourth side which are arranged in the preset axial direction and adjacent to the first side and the second side;
sliding the battery pack (2) into the battery compartment (11) in a preset axial direction after making the battery pack (2) correspond to the opening (111);
providing a first circuit board (81), a second circuit board (82) and a third circuit board (83);
the first circuit board (81) arranged on the first side;
the second circuit board (82) arranged on the second side;
the third circuit board (83) arranged on the third side; two ends of the third circuit board (83) are respectively adjacent to the first supporting plate (12) and the second supporting plate (13); and
providing a front shell (5) and a rear shell (6); wherein the front shell (5) is located on the fourth side; and is located on one side of the third circuit board (83) away from the energy storage housing (1);
respectively arranging the front shell (5) and the rear shell (6) on two sides of the energy storage housing (1) in the preset axial direction; and assembling the front shell (5) and the rear shell (6) on an outer side of the energy storage housing (1) to fix the first circuit board (81), the second circuit board (82) and the third circuit board (83), and the energy storage housing (1) in an accommodating space enclosed by the front shell (5) and the rear shell (6).

## Patentansprüche

1. Energiespeicher-Stromversorgung, **dadurch gekennzeichnet, dass** sie umfasst:
mindestens einen Batteriepack (2);
ein Energiespeichergehäuse (1), das mit einer ersten Stützplatte (12), einer der ersten Stützplatte (12) gegenüberliegenden zweiten Stützplatte (13) und einem zwischen der ersten Stützplatte (12) und der zweiten Stützplatte (13) angeordneten Batteriefach (11) versehen ist, wobei das Batteriefach (11) an mindestens einer Seite mit einer Öffnung (111) versehen ist; wobei die Öffnung (111) so eingerichtet ist, dass der mindestens eine Batteriepack (2) in einer vorgegebenen Axialrichtung in das Batteriefach (11) eingeschoben werden kann;
wobei das Energiespeichergehäuse (1) eine erste Seite der ersten Stützplatte (12), die von der zweiten Stützplatte (13) abgewandt ist, eine zweite Seite der zweiten Stützplatte (13), die von der ersten Stützplatte (12) abgewandt ist, sowie eine dritte Seite und eine vierte Seite umfasst, die in der vorgegebenen Axialrichtung angeordnet sind und an die erste Seite und die zweite Seite angrenzen;
eine erste Leiterplatte (81), die an der ersten Seite angeordnet ist;
eine zweite Leiterplatte (82), die an der zweiten Seite angeordnet ist;
eine dritte Leiterplatte (83), die an der dritten Seite angeordnet ist; wobei die beiden Enden der dritten Leiterplatte (83) jeweils an die erste Stützplatte (12) bzw. die zweite Stützplatte (13) angrenzen;
und eine Frontschale (5) und eine Rückschale (6), wobei die Frontschale (5) an der vierten Seite angeordnet ist; und wobei die Rückschale (6) an der dritten Seite und auf einer von dem Energiespeichergehäuse (1) abgewandten Seite der dritten Leiterplatte (83) angeordnet ist;
wobei die Frontschale (5) und die Rückschale (6) jeweils an einer der beiden Seiten des Energiespeichergehäuses (1) in der vorgegebenen Axialrichtung angeordnet sind; wobei die Frontschale (5) und die Rückschale (6) dazu eingerichtet sind, lösbar mit dem Energiespeichergehäuse (1) zusammengebaut zu werden; und wobei das Energiespeichergehäuse (1), die erste Leiterplatte (81), die zweite Leiterplatte (82) und die dritte Leiterplatte (83) in einer von der Frontschale (5) und der Rückschale (6) umschlossenen Aufnahmekammer befestigt sind.

2. Energiespeicher-Stromversorgung nach Anspruch 1, **dadurch gekennzeichnet, dass** der Batteriepack (2) mindestens zwei Batterien umfasst; das Batteriefach (11) mindestens zwei Batteriemontagepositionen (117) umfasst; die mindestens zwei Batteriemontagepositionen (117) mit der Öffnung (111) in Verbindung stehen; und die Batterien an den Batteriemontagepositionen (117) angeordnet sind;
wobei in dem Batteriefach eine Trennplatte angeordnet ist; die Trennplatte (118) zwischen den beiden Batteriemontagepositionen (117) angeordnet ist; und eine Länge der Trennplatte (118) in der vorgegebenen Axialrichtung kleiner als eine Länge einer Seitenwand des Batteriefachs (11) in der vorgegebenen Axialrichtung ist.

3. Energiespeicher-Stromversorgung nach Anspruch 1, **dadurch gekennzeichnet, dass** die Frontschale (5) und die Rückschale (6) dazu eingerichtet sind, lösbar miteinander zusammengebaut zu werden.

4. Energiespeicher-Stromversorgung nach Anspruch 3, **dadurch gekennzeichnet, dass** die Frontschale (5) mit einem ersten Rastschlitz (5a) versehen ist und die Rückschale mit einem ersten Rastelement (6a) versehen ist; und das erste Rastelement (6a) und der erste Rastschlitz (5a) dazu eingerichtet sind, lösbar miteinander verbunden zu werden.

5. Energiespeicher-Stromversorgung nach Anspruch 4, **dadurch gekennzeichnet, dass** die Energiespeicher-Stromversorgung einen Kammerabdeckungskörper (1014) umfasst, der in einer Längsrichtung der ersten Stützplatte (12) oder der zweiten Stützplatte (13) angeordnet ist; der Kammerabdeckungskörper (1014) dazu eingerichtet ist, lösbar mit dem Energiespeichergehäuse (1) verbunden zu werden; mindestens zwei zweite Rastelemente (1016) an dem Kammerabdeckungskörper angeordnet sind; mindestens zwei zweite Rastschlitze (1017) in dem Energiespeichergehäuse (1) angeordnet sind; und die zweiten Rastelemente (1016) und die zweiten Rastschlitze (1017) dazu eingerichtet sind, lösbar miteinander verbunden zu werden;
wobei in der Frontschale (5) ein dritter Rastschlitz (5b) vorgesehen ist, der mit einem der zweiten Rastschlitze (1017) in Verbindung steht, und in der Rückschale (6) ein vierter Rastschlitz (6b) vorgesehen ist, der mit dem anderen zweiten Rastschlitz (1017) in Verbindung steht; wobei, wenn der Kammerabdeckungskörper (1014) an dem Energiespeichergehäuse (1) montiert ist, eines der zweiten Rastelemente (1016) sich durch den dritten Rastschlitz (5b) und einen der zweiten Rastschlitze (1017) erstreckt und mit der Frontschale (5) und dem Energiespeichergehäuse (1) verbunden ist; und das andere zweite Rastelement (1016) sich durch den vierten Rastschlitz (6b) und den anderen zweiten Rastschlitz (1017) erstreckt und mit der Rückschale (6) und dem Energiespeichergehäuse (1) verbunden ist.

6. Energiespeicher-Stromversorgung nach Anspruch 4, **dadurch gekennzeichnet, dass** die Energiespeicher-Stromversorgung ferner eine Seitenplatte (17) umfasst, die in einer Längsrichtung der ersten Stützplatte (12) oder der zweiten Stützplatte (13) angeordnet ist; die Seitenplatte (17) dazu eingerichtet ist, lösbar mit dem Energiespeichergehäuse (1) verbunden zu werden; mindestens ein drittes Rastelement (171) und mindestens zwei vierte Rastelemente (172) an der Seitenplatte angeordnet sind; mindestens ein fünfter Rastschlitz (15) in dem Energiespeichergehäuse (1) vorgesehen ist; mindestens ein sechster Rastschlitz (5c) in der Frontschale (5) vorgesehen ist; mindestens ein siebter Rastschlitz (6c) in der Rückschale (6) vorgesehen ist; das dritte Rastelement (171) dazu eingerichtet ist, lösbar mit dem fünften Rastschlitz (15) verbunden zu werden; das vierte Rastelement (172) dazu eingerichtet ist, lösbar mit dem sechsten Rastschlitz (5c) verbunden zu werden; und eines der vierten Rastelemente (172) dazu eingerichtet ist, lösbar mit dem siebten Rastschlitz (6c) verbunden zu werden.

7. Energiespeicher-Stromversorgung nach Anspruch 3, **dadurch gekennzeichnet, dass** die Energiespeicher-Stromversorgung ferner eine Deckplatte (18) umfasst; und die Deckplatte (18) dazu eingerichtet ist, lösbar mit der Frontschale (5) und der Rückschale (6) zusammengebaut zu werden.

8. Energiespeicher-Stromversorgung nach Anspruch 7, **dadurch gekennzeichnet, dass** mindestens zwei fünfte Rastelemente (15) an der Deckplatte (18) angeordnet sind; die Frontschale (5) mit einem achten Rastschlitz (5d) versehen ist; die Rückschale (6) mit einem neunten Rastschlitz (6d) versehen ist; ein fünftes Rastelement (181) dazu eingerichtet ist, lösbar mit dem achten Rastschlitz (5d) verbunden zu werden; und ein fünftes Rastelement (181) dazu eingerichtet ist, lösbar mit dem neunten Rastschlitz (6d) verbunden zu werden; wobei das Energiespeichergehäuse (1) ferner eine Führungsnut (16) umfasst; die Führungsnut (16) in einer an der zweiten Stützplatte (13) gelegenen Seite des Energiespeichergehäuses (1) vorgesehen ist; an einer entsprechenden Position an der Frontschale (5) oder der Rückschale (6) eine Führungsplatte (5e) angeordnet ist; und die Führungsplatte (5e) dazu eingerichtet ist, entlang der Führungsnut (16) zu gleiten.

9. Energiespeicher-Stromversorgung nach Anspruch 1, **dadurch gekennzeichnet, dass** das Energiespeichergehäuse (1) mit einem ersten Montageabschnitt (191) versehen ist; der erste Montageabschnitt (191) auf einer von der zweiten Stützplatte (13) abgewandten Seite der ersten Stützplatte (12) angeordnet ist; und die erste Leiterplatte (81) und der erste Montageabschnitt (191) dazu eingerichtet sind, lösbar miteinander verbunden zu werden.

10. Energiespeicher-Stromversorgung nach Anspruch 1, **dadurch gekennzeichnet, dass** das Energiespeichergehäuse (1) mit einem ersten Befestigungsabschnitt (192) versehen ist; der erste Befestigungsabschnitt (192) auf einer von der ersten Stützplatte (12) abgewandten Seite der zweiten Stützplatte (13) angeordnet ist; der erste Befestigungsabschnitt (192) dazu eingerichtet ist, lösbar mit der zweiten Leiterplatte (82) verbunden zu werden; und auf einer von der ersten Stützplatte (12) abgewandten Seite der zweiten Stützplatte (13) ferner ein erster Begrenzungsabschnitt (193) angeordnet ist, der dazu eingerichtet ist, an der zweiten Leiterplatte (82) anzuliegen und diese zu positionieren.

11. Energiespeicher-Stromversorgung nach Anspruch 1, **dadurch gekennzeichnet, dass** ein zweiter Montageabschnitt (194) an dem Energiespeichergehäuse (1) angeordnet ist; die Energiespeicher-Stromversorgung ferner eine Beleuchtungsvorrichtung (57) umfasst, die dazu eingerichtet ist, elektrisch mit der zweiten Leiterplatte (82) verbunden zu werden; die Beleuchtungsvorrichtung (57) eine Wärmeableitlamelle (575) umfasst, die dazu eingerichtet ist, lösbar mit dem zweiten Montageabschnitt (194) verbunden zu werden; die Wärmeableitlamelle (575) einen dritten Montageabschnitt (5751) und einen mit dem dritten Montageabschnitt (5751) verbundenen zweiten Begrenzungsabschnitt (5752) umfasst; der dritte Montageabschnitt (5751) dazu eingerichtet ist, lösbar mit dem zweiten Montageabschnitt (5752) verbunden zu werden; und der zweite Begrenzungsabschnitt (5752) dazu eingerichtet ist, an dem zweiten Montageabschnitt (194) anzuliegen, um eine Montageposition der Wärmeableitlamelle (575) zu begrenzen;
wobei das Energiespeichergehäuse (1) ferner eine Beleuchtungskammer (1011) umfasst; die Beleuchtungskammer (1011) mit einem ersten Lichtaustritt (1012) versehen ist; der zweite Montageabschnitt (194) in der Beleuchtungskammer (1011) angeordnet ist; die Beleuchtungsvorrichtung (57) in der Beleuchtungskammer (1011) angeordnet ist; die Beleuchtungsvorrichtung (57) ferner ein lichtemittierendes Element (571) und eine an der Wärmeableitlamelle (575) angeordnete Sammellinse (572) umfasst; eine lichtemittierende Fläche des lichtemittierenden Elements (571) derart angeordnet ist, dass sie der Sammellinse (572) und dem ersten Lichtaustritt (1012) zugewandt ist; die Sammellinse (572) dazu eingerichtet ist, von dem lichtemittierenden Element (571) emittiertes Licht zu bündeln, um einen kleinen Lichtstrahl mit großer Beleuchtungsreichweite zu bilden; und die zweite Leiterplatte (82) dazu eingerichtet ist, elektrisch mit der ersten Leiterplatte (81) verbunden zu werden.

12. Energiespeicher-Stromversorgung nach Anspruch 1, **dadurch gekennzeichnet, dass** ein zweiter Befestigungsabschnitt (6f) auf einer der Frontschale (5) zugewandten Seite der Rückschale (6) angeordnet ist; in der dritten Leiterplatte (83) ein Loch vorgesehen ist; die dritte Leiterplatte (83) und der zweite Befestigungsabschnitt (6f) dazu eingerichtet sind, lösbar miteinander verbunden zu werden; und auf einer der Frontschale (5) zugewandten Seite der Rückschale (6) ferner ein Stützabschnitt (6k) angeordnet ist, der dazu eingerichtet ist, an der dritten Leiterplatte (83) anzuliegen und diese zu positionieren.

13. Energiespeicher-Stromversorgung nach Anspruch 1, **dadurch gekennzeichnet, dass** ein vierter Montageabschnitt (5h) und ein fünfter Montageabschnitt (6j) jeweils an der Frontschale (5) bzw. der Rückschale (6) angeordnet sind; wenn die Frontschale (5) und die Rückschale (6) an dem Energiespeichergehäuse (1) montiert sind, der vierte Montageabschnitt (5h) und der fünfte Montageabschnitt (6j) aneinander anliegen, um eine Montagegleitnut zu bilden; das Energiespeichergehäuse (1) ferner mit einem lichtdurchlässigen Lampenschirm (93) und einer Nachtleuchte versehen ist; der Lampenschirm (93) einziehbar und faltbar ausgebildet ist; die Nachtleuchte in dem Lampenschirm (93) angeordnet ist; die Nachtleuchte elektrisch mit der zweiten Leiterplatte (83) verbunden ist; der Lampenschirm (93) oder die Nachtleuchte mit einer Montagestruktur versehen ist; und die Montagestruktur dazu eingerichtet ist, lösbar mit der Montagegleitnut verbunden zu werden.

14. Energiespeicher-Stromversorgung nach Anspruch 1, **dadurch gekennzeichnet, dass** die Energiespeicher-Stromversorgung ferner einen an dem Energiespeichergehäuse (1) angeordneten Griff (91) umfasst; der Griff (91) einen siebten Montageabschnitt (911) und einen an dem siebten Montageabschnitt (911) angeordneten Silikagelstreifen (912) umfasst; die Energiespeicher-Stromversorgung ferner einen Gurt (9) umfasst; der Gurt (9) dazu eingerichtet ist, lösbar mit dem Energiespeichergehäuse (1) verbunden zu werden; eine Länge des Gurts (9) in einem Bereich von 500 mm bis 1900 mm liegt; eine Breite in einem Bereich von 10 mm bis 60 mm liegt; eine Dicke des Gurts (9) in einem Bereich von 0,5 mm bis 5 mm liegt; und ein Verhältnis der Länge des Gurts (9) zu einer Länge des Griffs (91) in einem Bereich von 1:3 bis 1:10 liegt.

15. Montageverfahren für eine Energiespeicher-Stromversorgung, **dadurch gekennzeichnet, dass** es umfasst:
Bereitstellen mindestens eines Batteriepacks (2);
Bereitstellen eines Energiespeichergehäuses (1), wobei das Energiespeichergehäuse (1) mit einer ersten Stützplatte (12), einer der ersten Stützplatte (12) gegenüberliegenden zweiten Stützplatte (13) und einem zwischen der ersten Stützplatte (12) und der zweiten Stützplatte (13) angeordneten Batteriefach (11) versehen ist, wobei das Batteriefach (11) an mindestens einer Seite mit einer Öffnung (111) versehen ist; wobei die Öffnung (111) so eingerichtet ist, dass der mindestens eine Batteriepack (2) in einer vorgegebenen Axialrichtung in das Batteriefach (11) eingeschoben werden kann;
wobei das Energiespeichergehäuse (1) eine erste Seite der ersten Stützplatte (12), die von der zweiten Stützplatte (13) abgewandt ist, eine zweite Seite der zweiten Stützplatte (13), die von der ersten Stützplatte (12) abgewandt ist, sowie eine dritte Seite und eine vierte Seite umfasst, die in der vorgegebenen Axialrichtung angeordnet sind und an die erste Seite und die zweite Seite angrenzen;
Einschieben des Batteriepacks (2) in einer vorgegebenen Axialrichtung in das Batteriefach (11), nachdem der Batteriepack (2) auf die Öffnung (111) ausgerichtet worden ist;
Bereitstellen einer ersten Leiterplatte (81), einer zweiten Leiterplatte (82) und einer dritten Leiterplatte (83); wobei die erste Leiterplatte (81) an der ersten Seite angeordnet ist; wobei die zweite Leiterplatte (82) an der zweiten Seite angeordnet ist; wobei die dritte Leiterplatte (83) an der dritten Seite angeordnet ist, wobei zwei Enden der dritten Leiterplatte (83) jeweils an die erste Stützplatte (12) bzw. die zweite Stützplatte (13) angrenzen; und
Bereitstellen einer Frontschale (5) und einer Rückschale (6); wobei die Frontschale (5) an der vierten Seite angeordnet ist und auf einer von dem Energiespeichergehäuse (1) abgewandten Seite der dritten Leiterplatte (83) angeordnet ist;
Anordnen der Frontschale (5) und der Rückschale (6) jeweils auf einer der beiden Seiten des Energiespeichergehäuses (1) in der vorgegebenen Axialrichtung; und Montieren der Frontschale (5) und der Rückschale (6) an einer Außenseite des Energiespeichergehäuses (1), um die erste Leiterplatte (81), die zweite Leiterplatte (82) und die dritte Leiterplatte (83) sowie das Energiespeichergehäuse (1) in einem von der Frontschale (5) und der Rückschale (6) umschlossenen Aufnahmeraum zu befestigen.

## Revendications

1. Alimentation électrique à stockage d'énergie, **caractérisée en ce qu'**elle comprend :
au moins un bloc-batterie (2) ;
un boîtier de stockage d'énergie (1), pourvu d'une première plaque de support (12), d'une deuxième plaque de support (13) opposée à la première plaque de support (12) et d'un compartiment de batteries (11) situé entre la première plaque de support (12) et la deuxième plaque de support (13), le compartiment de batteries (11) étant pourvu d'une ouverture (111) sur au moins un côté ; l'ouverture (111) étant configurée pour permettre à l'au moins un bloc-batterie (2) de coulisser dans le compartiment de batteries (11) dans une direction axiale prédéfinie ;
dans laquelle le boîtier de stockage d'énergie (1) comprend un premier côté de la première plaque de support (12) éloigné de la deuxième plaque de support (13), un deuxième côté de la deuxième plaque de support (13) éloigné de la première plaque de support (12), et un troisième côté et un quatrième côté qui sont agencés dans la direction axiale prédéfinie et adjacents au premier côté et au deuxième côté ;
un premier circuit imprimé (81), agencé sur le premier côté ;
un deuxième circuit imprimé (82), agencé sur le deuxième côté ;
un troisième circuit imprimé (83), agencé sur le troisième côté ; deux extrémités du troisième circuit imprimé (83) sont respectivement adjacentes à la première plaque de support (12) et à la deuxième plaque de support (13) ; et
une coque avant (5) et une coque arrière (6) ; la coque avant (5) étant située sur le quatrième côté ; et la coque arrière (6) étant située sur le troisième côté et sur un côté du troisième circuit imprimé (83) éloigné du boîtier de stockage d'énergie (1) ;
dans laquelle la coque avant (5) et la coque arrière (6) sont respectivement situées sur deux côtés du boîtier de stockage d'énergie (1) dans la direction axiale prédéfinie ; la coque avant (5) et la coque arrière (6) sont configurées pour être assemblées de manière amovible avec le boîtier de stockage d'énergie (1) ; et le boîtier de stockage d'énergie (1), le premier circuit imprimé (81), le deuxième circuit imprimé (82) et le troisième circuit imprimé (83) sont fixés dans un espace de réception délimité par la coque avant (5) et la coque arrière (6).

2. Alimentation électrique à stockage d'énergie selon la revendication 1, **caractérisée en ce que** le bloc-batterie (2) comprend au moins deux batteries ; le compartiment de batteries (11) comprend au moins deux positions de montage de batteries (117) ; les au moins deux positions de montage de batteries (117) sont en communication avec l'ouverture (111) ; et les batteries sont agencées dans les positions de montage de batteries (117) ;
dans laquelle une plaque de cloisonnement est agencée dans le compartiment de batteries ; la plaque de cloisonnement (118) est agencée entre les deux positions de montage de batteries (117) ; et une longueur de la plaque de cloisonnement (118) dans la direction axiale prédéfinie est inférieure à une longueur d'une paroi latérale du compartiment de batteries (11) dans la direction axiale prédéfinie.

3. Alimentation électrique à stockage d'énergie selon la revendication 1, **caractérisée en ce que** la coque avant (5) et la coque arrière (6) sont configurées pour être assemblées de manière amovible.

4. Alimentation électrique à stockage d'énergie selon la revendication 3, **caractérisée en ce que** la coque avant (5) est pourvue d'une première fente de boucle (5a), et la coque arrière est pourvue d'une première boucle (6a) ; et la première boucle (6a) et la première fente de boucle (5a) sont configurées pour être reliées de manière amovible l'une à l'autre.

5. Alimentation électrique à stockage d'énergie selon la revendication 4, **caractérisée en ce que** l'alimentation électrique à stockage d'énergie comprend un corps de couvercle de chambre (1014) agencé dans la direction de la longueur de la première plaque de support (12) ou de la deuxième plaque de support (13) ; le corps de couvercle de chambre (1014) est configuré pour être relié de manière amovible au boîtier de stockage d'énergie (1) ; au moins deux deuxièmes boucles (1016) sont agencées sur le corps de couvercle de chambre ; au moins deux deuxièmes fentes de boucle (1017) sont fournies dans le boîtier de stockage d'énergie (1) ; et les deuxièmes boucles (1016) et les deuxièmes fentes de boucle (1017) sont configurées pour être reliées l'une à l'autre de manière amovible ;
dans laquelle une troisième fente de boucle (5b) en communication avec l'une des deuxièmes fentes de boucle (1017) est fournie dans la coque avant (5), et une quatrième fente de boucle (6b) en communication avec l'autre deuxième fente de boucle (1017) est fournie dans la coque arrière (6) ; lorsque le corps de couvercle de chambre (1014) est assemblé au boîtier de stockage d'énergie (1), l'une des deuxièmes boucles (1016) traverse la troisième fente de boucle (5b) et l'une des deuxièmes fentes de boucle (1017) et est reliée à la coque avant (5) et au boîtier de stockage d'énergie (1) ; et l'autre deuxième boucle (1016) traverse la quatrième fente de boucle (6b) et l'autre deuxième fente de boucle (1017) et est reliée à la coque arrière (6) et au boîtier de stockage d'énergie (1).

6. Alimentation électrique à stockage d'énergie selon la revendication 4, **caractérisée en ce que** l'alimentation électrique à stockage d'énergie comprend en outre une plaque latérale (17) agencée dans le sens de la longueur de la première plaque de support (12) ou de la deuxième plaque de support (13) ; la plaque latérale (17) est configurée pour être reliée de manière amovible au boîtier de stockage d'énergie (1) ; au moins une troisième boucle (171) et au moins deux quatrièmes boucles (172) sont agencées sur la plaque latérale ; au moins une cinquième fente de boucle (15) est fournie dans le boîtier de stockage d'énergie (1) ; au moins une sixième fente de boucle (5c) est fournie dans la coque avant (5) ; au moins une septième fente de boucle (6c) est fournie dans la coque arrière (6) ; la troisième boucle (171) est configurée pour être reliée de manière amovible à la cinquième fente de boucle (15) ; la quatrième boucle (172) est configurée pour être reliée de manière amovible à la sixième fente de boucle (5c) ; et l'une des quatrièmes boucles (172) est configurée pour être reliée de manière amovible à la septième fente de boucle (6c).

7. Alimentation électrique à stockage d'énergie selon la revendication 3, **caractérisée en ce que** l'alimentation électrique à stockage d'énergie comprend en outre une plaque supérieure (18) ; et la plaque supérieure (18) est configurée pour être assemblée de manière amovible avec la coque avant (5) et la coque arrière (6).

8. Alimentation électrique à stockage d'énergie selon la revendication 7, **caractérisée en ce qu'**au moins deux cinquièmes boucles (15) sont agencées sur la plaque supérieure (18) ; la coque avant (5) est pourvue d'une huitième fente de boucle (5d) ; la coque arrière (6) est pourvue d'une neuvième fente de boucle (6d) ; une cinquième boucle (181) est configurée pour être reliée de manière amovible à la huitième fente de boucle (5d) ; et une cinquième boucle (181) est configurée pour être reliée de manière amovible à la neuvième fente de boucle (6d) ;
dans laquelle le boîtier de stockage d'énergie (1) comprend en outre une fente de guidage (16) ; la fente de guidage (16) est fournie sur un côté du boîtier de stockage d'énergie (1) situé sur la deuxième plaque de support (13) ; une plaque de guidage (5e) est agencée au niveau d'une position correspondante sur la coque avant (5) ou la coque arrière (6) ; et la plaque de guidage (5e) est configurée pour coulisser le long de la fente de guidage (16).

9. Alimentation électrique à stockage d'énergie selon la revendication 1, **caractérisée en ce que** le boîtier de stockage d'énergie (1) est pourvu d'une première partie de montage (191) ; la première partie de montage (191) est agencée sur un côté de la première plaque de support (12) éloigné de la deuxième plaque de support (13) ; et le premier circuit imprimé (81) et la première partie de montage (191) sont configurés pour être reliés de manière amovible l'un à l'autre.

10. Alimentation électrique à stockage d'énergie selon la revendication 1, **caractérisée en ce que** le boîtier de stockage d'énergie (1) est pourvu d'une première partie de fixation (192) ; la première partie de fixation (192) est agencée sur un côté de la deuxième plaque de support (13) éloigné de la première plaque de support (12) ; la première partie de fixation (192) est configurée pour être reliée de manière amovible au deuxième circuit imprimé (82) ; et une première partie de limitation (193) configurée pour appuyer contre et positionner le deuxième circuit imprimé (82) est en outre agencée sur un côté de la deuxième plaque de support (13) éloigné de la première plaque de support (12).

11. Alimentation électrique à stockage d'énergie selon la revendication 1, **caractérisée en ce qu'**une deuxième partie de montage (194) est agencée sur le boîtier de stockage d'énergie (1) ; l'alimentation électrique à stockage d'énergie comprend en outre un dispositif d'éclairage (57) configuré pour être relié électriquement au deuxième circuit imprimé (82) ; le dispositif d'éclairage (57) comprend une ailette de dissipation thermique (575) configurée pour être reliée de manière amovible à la deuxième partie de montage (194) ; l'ailette de dissipation thermique (575) comprend une troisième partie de montage (5751) et une deuxième partie de limitation (5752) reliée à la troisième partie de montage (5751) ; la troisième partie de montage (5751) est configurée pour être reliée de manière amovible à la deuxième partie de montage (5752) ; et la deuxième partie de limitation (5752) est configurée pour appuyer contre la deuxième partie de montage (194) afin de limiter la position de montage de l'ailette de dissipation thermique (575) ;
dans laquelle le boîtier de stockage d'énergie (1) comprend en outre une chambre d'éclairage (1011) ; la chambre d'éclairage (1011) est pourvue d'une première sortie de lumière (1012) ; la deuxième partie de montage (194) est agencée dans la chambre d'éclairage (1011) ; le dispositif d'éclairage (57) est agencé dans la chambre d'éclairage (1011) ; le dispositif d'éclairage (57) comprend en outre un élément électroluminescent (571) et une lentille condensatrice (572) agencés sur l'ailette de dissipation thermique (575) ; une surface électroluminescente de l'élément électroluminescent (571) est agencée de manière à faire face à la lentille condensatrice (572) et à la première sortie de lumière (1012) ; la lentille condensatrice (572) est configurée pour condenser la lumière émise par l'élément électroluminescent (571) afin de former un petit faisceau à longue distance d'éclairage ; et le deuxième circuit imprimé (82) est configuré pour être relié électriquement au premier circuit imprimé (81).

12. Alimentation électrique à stockage d'énergie selon la revendication 1, **caractérisée en ce qu'**une deuxième partie de fixation (6f) est agencée sur un côté de la coque arrière (6) faisant face à la coque avant (5) ; un trou est fourni dans le troisième circuit imprimé (83) ; le troisième circuit imprimé (83) et la deuxième partie de fixation (6f) sont configurés pour être reliés de manière amovible l'un à l'autre ; et une partie de support (6k) configurée pour appuyer contre et positionner le troisième circuit imprimé (83) est en outre agencée sur un côté de la coque arrière (6) faisant face à la coque avant (5).

13. Alimentation électrique à stockage d'énergie selon la revendication 1, **caractérisée en ce qu'**une quatrième partie de montage (5h) et une cinquième partie de montage (6j) sont respectivement agencées sur la coque avant (5) et la coque arrière (6) ; lorsque la coque avant (5) et la coque arrière (6) sont montées sur le boîtier de stockage d'énergie (1), la quatrième partie de montage (5h) et la cinquième partie de montage (6j) appuient l'une contre l'autre pour former une glissière de montage ; le boîtier de stockage d'énergie (1) est en outre pourvu d'un abat-jour à transmission de lumière (93) et d'une veilleuse ; l'abat-jour (93) est configuré pour être rétractable et pliable ; la veilleuse est agencée dans l'abat-jour (93) ; la veilleuse est reliée électriquement au deuxième circuit imprimé (83) ; l'abat-jour (93) ou la veilleuse est pourvu d'une structure de montage ; et la structure de montage est configurée pour être reliée de manière amovible à la glissière de montage.

14. Alimentation électrique à stockage d'énergie selon la revendication 1, **caractérisée en ce que** l'alimentation électrique à stockage d'énergie comprend en outre une poignée (91) agencée sur le boîtier de stockage d'énergie (1) ; la poignée (91) comprend une septième partie de montage (911) et une bande de gel de silice (912) agencée sur la septième partie de montage (911) ; l'alimentation électrique à stockage d'énergie comprend en outre une sangle (9) ; la sangle (9) est configurée pour être reliée de manière amovible au boîtier de stockage d'énergie (1) ; une longueur de la sangle (9) est dans une plage allant de 500 mm à 1900 mm ; une largeur est dans une plage allant de 10 mm à 60 mm ; une épaisseur de la sangle (9) est dans une plage allant de 0,5 mm à 5 mm ; et un rapport entre la longueur de la sangle (9) et une longueur de la poignée (91) est dans une plage allant de 1:3 à 1:10.

15. Procédé d'assemblage d'une alimentation électrique à stockage d'énergie, **caractérisé en ce qu'**il comprend :
la fourniture d'au moins un bloc-batterie (2) ;
la fourniture d'un boîtier de stockage d'énergie (1), le boîtier de stockage d'énergie (1) étant pourvu d'une première plaque de support (12), d'une deuxième plaque de support (13) opposée à la première plaque de support (12) et d'un compartiment de batteries (11) situé entre la première plaque de support (12) et la deuxième plaque de support (13), le compartiment de batteries (11) étant pourvu d'une ouverture (111) sur au moins un côté ; l'ouverture (111) étant configurée pour permettre à l'au moins un bloc-batterie (2) de coulisser dans le compartiment de batteries (11) selon une direction axiale prédéfinie ;
dans lequel le boîtier de stockage d'énergie (1) comprend un premier côté de la première plaque de support (12) éloigné de la deuxième plaque de support (13), un deuxième côté de la deuxième plaque de support (13) éloigné de la première plaque de support (12), et un troisième côté et un quatrième côté qui sont agencés dans la direction axiale prédéfinie et adjacents au premier côté et au deuxième côté ;
le coulissement du bloc-batterie (2) dans le compartiment de batteries (11) dans une direction axiale prédéfinie après mise en correspondance du bloc-batterie (2) avec l'ouverture (111) ;
la fourniture d'un premier circuit imprimé (81), d'un deuxième circuit imprimé (82) et d'un troisième circuit imprimé (83) ;
le premier circuit imprimé (81) agencé sur le premier côté ;
le deuxième circuit imprimé (82) agencé sur le deuxième côté ;
le troisième circuit imprimé (83) agencé sur le troisième côté ; deux extrémités du troisième circuit imprimé (83) sont respectivement adjacentes à la première plaque de support (12) et à la deuxième plaque de support (13) ; et
la fourniture d'une coque avant (5) et d'une coque arrière (6) ; la coque avant (5) étant située sur le quatrième côté ; et étant située sur un côté du troisième circuit imprimé (83) éloigné du boîtier de stockage d'énergie (1) ;
l'agencement de la coque avant (5) et de la coque arrière (6) respectivement sur deux côtés du boîtier de stockage d'énergie (1) dans la direction axiale prédéfinie ; et l'assemblage de la coque avant (5) et de la coque arrière (6) sur un côté externe du boîtier de stockage d'énergie (1) afin de fixer le premier circuit imprimé (81), le deuxième circuit imprimé (82) et le troisième circuit imprimé (83), et le boîtier de stockage d'énergie (1) dans un espace de réception délimité par la coque avant (5) et la coque arrière (6).
